# EUROPEAN PATENT SPECIFICATION

(11) **EP 2 771 380 B1**
(45) Date of publication and mention of the grant of the patent: **05.12.2018**
(21) Application number: 12784187.2
(22) Date of filing: 24.10.2012
(51) Int. Cl.: C08G 18/42, C08G 18/32, C08G 18/66, H01M 10/05, H01M 4/62

(54) **POLYURETHANE BASED MEMBRANES AND/OR SEPARATORS FOR ELECTROCHEMICAL CELLS**
AUF POLYURETHAN BASIERENDE MEMBRANEN UND/ODER SEPARATOREN FÜR ELEKTROCHEMISCHE ZELLEN
MEMBRANES À BASE DE POLYURÉTHANE ET/OU SÉPARATEURS POUR CELLULES ÉLECTROCHIMIQUES

(30) Priority: 28.10.2011 US 201161552538 P
(43) Date of publication of application: 03.09.2014
(73) Proprietor: Lubrizol Advanced Materials, Inc., Cleveland, OH 44141-3247 (US)
(72) Inventor: LU, Qiwei, Ohio 44131 (US); CAO, Feina, Canton, Michigan 48187 (US); GOR, Tesham, OHIO 44141 (US); Xie, Jian, Indiana 46033 (US); LIU, Yadong, Indianapolis, In 46224 (US); ECKSTEIN, Yona, Florida 33066 (US)
(74) Representative: dompatent von Kreisler Selting Werner - Partnerschaft von Patent- und Rechtsanwälten mbB
(86) International application number: PCT/US2012/061520
(87) International publication number: WO 2013/062990

(56) References cited:
- DE-A1- 19 855 889
- US-A1- 2011 092 648

## Description

### BACKGROUND OF THE INVENTION

The invention relates to a membrane comprising a poly(dialkylene ester) thermoplastic polyurethane composition. The invention also provides an electrochemical cell comprising a positive electrode, a negative electrode, and (I) a separator membrane disposed between said positive and negative electrodes, wherein the said membrane comprises the described poly(dialkylene ester) thermoplastic polyurethane composition.

There has been a great deal of interest in developing safer, better, and more efficient methods for storing energy for applications such as radio communication, satellites, portable computers and electric vehicles to name but a few. There have also been concerted efforts to develop high energy, cost effective batteries having improved performance characteristics, particularly as compared to storage systems known in the art.

Rechargeable cells, or secondary cells, are more desirable than primary cells, non-rechargeable cells, since the associated chemical reactions that take place at the positive and negative electrodes of the battery are reversible. Electrodes for secondary cells are capable of being regenerated (i.e., recharged) many times by the application of an electrical charge thereto. Numerous advanced electrode systems have been developed for storing electrical charge. Concurrently, much effort has been dedicated to the development of membranes capable of enhancing the capabilities of electrochemical cells.

There exists a need for improved membranes to be used in the described electrochemical cells. During charging of the cell describe above, electrons flow through an external voltage source and lithium cations flow through the electrolyte toward the anode material. When the cell is used, the lithium cations flow through the electrolyte, but the electrons flow from the anode material to the cathode material through a load.

In order to avoid a short circuit within the electrochemical cell, a layer which is electrically insulating but permeable to lithium cations is located between the two electrodes. This may be what is known as a solid electrolyte or a conventional separator, and may also be referred to as a membrane.

In the production of many electrochemical cells, e.g., in the case of lithium batteries in the form of round cells, the battery films required, i.e., cathode films, anode films and separator films are combined using a winding apparatus to give a battery winding. In conventional lithium-ion batteries, the cathode films and anode films are bonded to collector electrodes in the form of, for example, an aluminum foil or a copper foil. Metal foils of this type ensure adequate mechanical stability.

In contrast, the separator film must resist mechanical stresses in its own right, and this poses no problems for conventional separator films based, for example, on polyolefins, at the thickness in which they are used. However, such materials experience heat shrinkage and other problems that can inhibit the performance of the electrochemical cells in which they are used. Solutions to date to address these problems, included using a different process to hot-laminate these separators on electrodes, can lead to problems with the micro pores needed for the separators to function. These separators must also offer the necessary conductivity while avoiding swelling, another common problem in these applications.

In addition, the separators need to help improve the safety of the electrochemical cells. The electrolyte systems in conventional electrochemical cells are flammable liquids. Thus, the electrochemical cells, including the separators, need to be designed to help control and reduce the risk associated with these materials, or even allow their replacement with less flammable alternatives. US 2011/092648 relates to electrostatic dissipative thermoplastic polyurethanes (ESD-TPU) composition made by reacting (a) at least one polyester polyol intermediate ith (b) at least one diisocyanate and (c) at least one chain extender. The polyester polyol intermediate may be derived from at least one dialkylene glycol and at least one dicarboxylic acid, or an ester or anhydride thereof. The polymeric article obtained may be used as separators for the contruction of lithium-ion batteries; polymer electrolyte membranes the construction of lithium-polymer batteries and fuel cells; or combinations thereof.

DE 198 55 889 discloses the preparation of TPU-based membranes used in electrochemical cells. They are characterized by an excellent heat, melt and shrinkage resistance. The formulation of the polyol used for the preparation of the TPU used is disclosed: poly(butylene)adipate, poly(ethylene/butylene)adipate or polytetramethyleneglycol.

Therefore, there is a need for separators, which may also be referred to as membranes, that perform at least as well as conventional separator films based, for example, those based on polyolefins, but without the heat shrinkage problems, without swelling problems, and/or with at least as good, if not better mechanical strength, to allow their use in electrochemical cells, the performance demands on which are continuing to increase.

In other words, there is a need for improved separators as well as improved electrochemical cells that use such separators that address the problems seen in the current alternatives.

### SUMMARY OF THE INVENTION

The present invention provides: polyurethane based membranes and/or separators for use in electrochemical cells made from the described poly(dialkylene ester) thermoplastic polyurethane composition; and the electrochemical cells themselves that utilize such membranes and/or separators. The invention further provides for such electrochemical cells where: (i) the electrodes of the cells are composite electrodes made using the described poly(dialkylene ester) thermoplastic polyurethane composition; (ii) the electrolyte system of the cells include a polymer gel electrolyte system that includes said poly(dialkylene ester) thermoplastic polyurethane composition, an alkali metal salt, and an aprotic organic solvent; or (iii) a combination thereof.
In particular the present invention provides the following embodiments:
1. A membrane comprising
   (a) a poly(dialkylene ester) thermoplastic polyurethane composition made by reacting (i) at least one poly(dialkylene ester) polyol intermediate with (ii) at least one diisocyanate and (iii) at least one chain extender;
   wherein (i), the polyester polyol intermediate, comprises an intermediate derived from at least one dialkylene glycol and at least one di-carboxylic acid, or an ester or anhydride thereof, and wherein the thermoplastic polyurethane composition further comprises a filler selected from the group consisting of nanofillers and nanofibers.
2. The membrane of embodiment 1 wherein component (iii) the chain extender comprises hydroquinone bis (beta-hydroxyethyl) ether.
3. The membrane of any of the embodiments 1 to 2 wherein the di-carboxylic acid contains from 4 to 15 carbon atoms and the dialkylene glycol contains from 2 to 8 aliphatic carbon atoms.
4. The membrane of any of the embodiments 1 to 3 wherein (ii), the diisocyanate, comprises: 4,4'-methylenebis-(phenyl isocyanate); hexamethylene diisocyanate; 3,3'-dimethylbiphenyl-4,4'-diisocyanate; m-xylylene diisocyanate; phenylene-1,4-diisocyanate; naphthalene-1,5-diisocyanate; diphenylmethane-3,3'-dimethoxy-4,4-diisocyanate; toluene diisocyanate; isophorone diisocyanate; 1,4-cyclohexyl diisocyanate; decane-1,10-diisocyanate; dicyclohexylmethane-4,4'-diisocyanate; or combinations thereof; and
   wherein (iii), the chain extender, comprises: hydroquinone bis (beta-hydroxyethyl) ether; ethylene glycol; diethylene glycol; propylene glycol; dipropylene glycol; 1,4-butanediol; 1,6-hexanediol; 1,3-butanediol; 1,5-pentanediol; neopentylglycol; or combinations thereof.
5. The membrane of any of the embodiments 1 to 4 wherein: (i), the polyester polyol intermediate, comprises poly(diethylene glycol adipate); (ii), the diisocyanate, comprises 4,4'-methylenebis-(phenyl isocyanate); and (iii), the chain extender, comprises butanediol, benzene glycol, or combinations thereof.
6. The membrane of any of the embodiments 1 to 5 further comprising an effective amount of a lithium containing salt.
7. The membrane of any of the embodiments 1 to 6 further comprising an organic solvent.
8. The membrane of any of the embodiments 1 to 7 wherein said membrane has a Li+ conductivity of >1.0x10⁻⁵ S/cm, as measured with a Solartron analytical system at temperature of 20 to 30 °C.
9. The membrane of any of the embodiments 1 to 8 wherein said membrane has at least one of the following characteristics:
   (i) a weight average molecular weight of at least 60,000;
   (ii) a melting point of >120 °C; and
   (iii) a glass transition temperature of <-10 °C.
10. The membrane of any of the embodiments 1 to 9 wherein (a), the polyester polyol component, is substantially free of polyether polyols.
11. The membrane of any of the embodiments 1 to 10 further comprising at least one base polymer, or further comprising at least one base polymer wherein the base polymer comprises: a polyolefin; a styrenic resin; a thermoplastic polyurethane, a polyamide; an acrylic polymer; a polyvinylchloride; a polyvinylidene fluoride; a polyethylene oxide; an ethylene oxide-propylene oxide copolymer; a polyacrylonitrile; a polyoxymethylene; a polyester; a polycarbonate; a polyphenylene oxide; polyphenylene sulfide; or combinations thereof.
12. The membrane of any of the embodiments 1 to 11 further comprising at least one additional additive, comprising a plasticizer, a lubricant, an antioxidant, a heat stabilizer, hydrolytic stabilizer, an acid scavenger, mineral and/or inert filler, or any combination thereof.
13. An electrochemical cell comprising a positive electrode, a negative electrode, and
   (I)
      (A) a separator membrane as defined in any one of embodiments 1 to 12, wherein said membrane is disposed between said positive and negative electrodes; and
      (B) an electrochemically active electrolyte species.
14. The electrochemical cell of embodiment 13, wherein said electrolyte species is a liquid electrolyte comprising an alkali metal salt, wherein said electrolyte is dissolved in an aprotic organic solvent, preferably wherein said alkali metal salt is selected from the group consisting of materials having the formula M⁺X⁻;
   wherein M⁺ is an alkali metal cation such as Li⁺, Na⁺, K⁺ or combinations thereof; and wherein X⁻ is an ion such as Cl⁻, Br⁻, I⁻, ClO₄⁻, BF₄⁻, PF₆⁻, AsF₆⁻, SbF₆⁻, CH₃CO₂⁻, CF₃SO₃⁻, (CH₃SO₂)₂N⁻, (CF₃SO₂)₃C⁻, B(C₂O₄)₂⁻, or combinations thereof; and
   wherein said aprotic organic solvent is selected from the group consisting of propylene carbonate, ethylene carbonate, diethyl carbonate, ethyl methyl carbonate, dimethyl carbonate, dipropyl carbonate, dimethyl sulfoxide, acetonitrile, dimethyloxyethane, diethoxyethane, tetrahydrofuran, and combinations thereof.
15. The electrochemical cell of embodiment 13 or 14 having at least one of the following characteristics:
   (i) a charge/discharge cycle life of >500 cycles;
   (ii) a charge/discharge efficiency of >90% after 500 cycles;
   (iii) an operation window of -10 °C to 70 °C.
16. The electrochemical cell of any of the embodiments 13 to 15 wherein the electrochemical cell further comprises:
   (II) a polymer gel electrolyte system disposed between said positive and negative electrodes, wherein the polymer electrolyte comprises (A) said poly(dialkylene ester) thermoplastic polyurethane composition, (B) an alkali metal salt, and (C) an aprotic organic solvent.
17. The electrochemical cell of any of the embodiments 13 to 16 wherein the positive and negative electrodes comprise a composition of (a) the poly(dialkylene ester) thermoplastic polyurethane composition as defined in any one of embodiments 1 to 12, and (b) a cathode or anode powder.

In some of these embodiments, component (iii) is essentially free or, or even free of, ethylene glycol, butanediol, and/or small diamines.

The invention further provides for the described membrane further including an effective amount of a lithium containing salt and optionally an organic solvent. In some embodiments, the membrane has a Li+ conductivity of >1.0x10⁻⁵ S/cm (which may also be represented as >1E-5 S/cm and stands for Siemens per centimeter), >1E-4 S/cm, or >1E-3 S/cm, as measured with a Solartron analytical system at room temperature, typically 20 to 30°C (1470 & 1400).

In some embodiments, the membrane has at least one of the following characteristics: (i) a weight average molecular weight of at least 60,000; (ii) a melting point of >120°C, >140°C, or even >160°C); and (iii) a glass transition temperature of <-10°C, < -20°C, or even <-30°C.

### DETAILED DESCRIPTION OF THE INVENTION

Various features and embodiments of the invention will be described below.

The present invention relates to a composition comprising at least one thermoplastic polyurethane elastomer, more specifically a poly(dialkylene ester) thermoplastic polyurethane, where the composition is used in the preparation of a membrane for an electrochemical cell, or an electrochemical cell that utilizes the described membrane. In the present invention, the described membrane may be used as a separator in the described electrochemical cells.

### The Membrane

We have found out that membranes which consist of the polyurethane elastomers specified herein give satisfactory Li ion transfer speed in battery applications at high current charge and discharge of equal or above 2.5 mA/cm². Membranes of this kind do neither shrink nor melt down even at temperatures above 200°C. This prevents short circuits within a temperature range of 170 to 200°C due to shrinkage which might well be the case when using polyolefin separators. Thus, these membranes may be used for bigger surface batteries. Other advantages of said membranes are their suitability for being laminated on electrodes by heat and their good contact with the electrode surface when manufactured into round cells and prismatic cells by using a respective winding device.

The membranes of the present invention comprise a poly(dialkylene ester) thermoplastic polyurethane composition. The poly(dialkylene ester) thermoplastic polyurethane is made by reacting (i) at least one poly(dialkylene ester) polyol intermediate with (ii) at least one diisocyanate and (iii) at least one chain extender. Poly(dialkylene ester) thermoplastic polyurethane compositions suitable for use in the present invention are described in detail below.

The composition according to the invention may be dissolved and dispersed in an inorganic, but preferably organic liquid diluent, the resulting mixture being intended to have a viscosity of preferably 100 to 50,000 mPas, and then applying this solution or dispersion in a manner known per se, such as by casting, spraying, pouring, dipping, spin coating, roller coating or printing--by relief, intaglio, planographic or screen printing--to a carrier material. Subsequent processing can be done by customary methods, for example, by removing the diluent and curing the binder.

Suitable organic diluents are aliphatic ethers, especially tetrahydrofuran and dioxane, hydrocarbons, especially hydrocarbon mixtures such as petroleum spirit, toluene and xylene, aliphatic esters, especially ethyl acetate and butyl acetate, and ketones, especially acetone, ethyl methyl ketone, cyclohexanone, diethylformamide, chloroform, 1,1,2,2-tetrachloroethane, diethylacetamide, dimethylformamide, dimethylacetamide, and N-methylpyrrolidone. Mixtures of such diluents can also be employed.

Suitable carrier materials are those materials customarily used for electrodes, preferably metals such as aluminum and copper. It is also possible to use temporary supports, such as films, especially polyester films such as polyethylene terephthalate films. Such films may advantageously be provided with a release layer, preferably comprising polysiloxanes.

The preparation of the separators starting from the composition can also be carried out by thermoplastic methods, for example, by injection molding, casting, compression molding, kneading or extrusion, with or without a subsequent calendering step of the described mixture according to the invention. After forming a film of the mixture, volatile components such as solvent or plasticizer can be removed.

Furthermore, the present invention relates to a composite, which may be in particular used in electrochemical cells, preferably in the form of a film, more preferably in the form of a film having a total thickness of 15 to 1500 µm, especially having a total thickness of 50 to 500 µm, comprising at least one first layer comprising an electron conducting electrochemical active compound, and at least one second layer being free of an electron-conducting electrochemically active compound, the latter layer comprising the mixture according to the invention.

Furthermore, the present invention describes a process for the preparation of such an composite comprising the following steps: (I) preparing at least one first layer, as defined above; (II) preparing at least one second layer, as defined above; and (III) subsequently combining the at least one first layer and the at least one second layer by a commonly used coating process.

Preferably, the at least one second layer is prepared on a temporary support. According to the invention, there may be used commonly used temporary supports, such as a separation film of a polymer or a preferably coated paper, such as a siliconized polyester film. The preparation of this second layer may be also conducted on a permanent support, such as a discharge electrode, or without any support.

Combining and preparation, respectively, of the above defined layers may be achieved by pressure-less processes for coating or preparing films, such as pouring or knife coating, as well as by processes under pressure, such as extruding.

Such a composite may be filled with the electrolyte and the conducting salt either before combining the layers or, preferably, after combining the layers, optionally after contacting the same with suitable discharge electrodes, e.g., a metal film, and may be even carried out after introducing the composite in a battery housing, whereby the specific micro porous structure of the layers achieved by using the mixture according to the invention, particularly attributed to the presence of the above defined solid in the separator and optionally in the electrodes, allows the soaking of the electrolyte and the conducting salt and the displacement of the air being present in the pores. The filling may be conducted at temperatures ranging from 0 to about 100°C, depending on the used electrolyte.

In some embodiments, the membrane of the present invention has a Li+ conductivity of >1.0E-5 S/cm (>1.0x10⁻⁵ S/cm), or > 1E-4 S/cm, or >1E-3 S/cm, as measured with a Solartron analytical system at room temperature, typically 20 to 30°C (1470 & 1400). In some embodiments, the membrane has at least one of the following characteristics: (i) a weight average molecular weight of at least 60,000; (ii) a melting point of >120°C, >140°C, or even >160°C; and (iii) a glass transition temperature of <-10°C, or < -20°C, or even <-30°C.

In any of the above described embodiments, the membrane may be made from a unique poly(dialkylene ester) polyol component which may be free of conventional polyether and/or polyester polyols. In still other embodiments, the membrane may further comprising at least one base polymer. Suitable base polymers include: a polyolefin; a styrenic resin; a thermoplastic polyurethane, a polyamide; an acrylic polymer; a polyvinylchloride; a polyvinylidene fluoride; a polyethylene oxide; an ethylene oxide-propylene oxide copolymer; a polyacrylonitrile; a polyoxymethylene; a polyester; a polycarbonate; a polyphenylene oxide; polyphenylene sulfide; or combinations thereof.

In some embodiments, fillers may be used in the compositions of the invention, particularly when they are used in the preparation of the membranes describe above. Suitable fillers include nano-fillers and even nanofibers.

### The Thermoplastic Polyurethane Compositions

The thermoplastic polyurethane compositions of the present invention are poly(dialkylene ester) thermoplastic polyurethane compositions. The poly(dialkylene ester) thermoplastic polyurethane is made by reacting (i) at least one poly(dialkylene ester) polyol intermediate with (ii) at least one diisocyanate and (iii) at least one chain extender.

The poly(dialkylene ester) polyol intermediate is derived from at least one dialkylene glycol and at least one di-carboxylic acid, or an ester or anhydride thereof. However, other polyol intermediates may also be present and used in combination with the poly(dialkylene ester) polyol intermediate described herein.

The di-carboxylic acid mentioned above may contain from 4 to 15 carbon atoms. Suitable examples of the di-carboxylic acid include succinic acid, glutaric acid, adipic acid, pimelic acid, suberic acid, azelaic acid, sebacic acid, dodecanedioic acid, isophthalic acid, terephthalic acid, cyclohexane dicarboxylic acid, or combinations thereof. In some embodiments, the di-carboxylic acid is adipic acid.

The dialkylene glycol described above may contain from 2 to 8 carbon atoms, and in some embodiments 2 to 8 aliphatic carbon atoms (still allowing for the presence of aromatic carbon atoms). Suitable examples of the dialkylene glycol include oxydimethanol, diethylene glycol, dipropylene glycol, 3,3-oxydipropan-1-ol, dibutylene glycol, or combinations thereof. In some embodiments, the dialkylene glycol is diethylene glycol.

In some embodiments, the poly(dialkylene ester) polyol intermediate is derived from adipic acid and diethylene glycol, and has a number average molecular weight of from 1000 to 4000, or from 1500 to 3500, or even from 2000 to 3000. In some embodiments, the poly(dialkylene ester) polyol intermediate is used in combination with a second polyol comprising a poly(mono-alkylene ester), for example, a polyester polyol derived from butanediol and adipic acid, where the resulting polyol may have a number average molecular weight of from 100 to 4000, or from 1500 to 3500, or even from 2000 or 2100 to 3000.

As noted above, the poly(dialkylene ester) thermoplastic polyurethane is made by reacting (i) at least one poly(dialkylene ester) polyol intermediate with (ii) at least one diisocyanate and (iii) at least one chain extender.

The poly(dialkylene ester) polyol intermediate may be used in combination with one or more additional polyols. Suitable polyester polyol intermediates for use in this invention may be derived from at least one dialkylene glycol and at least one dicarboxylic acid, or an ester or anhydride thereof. The polyester polyol intermediates of the present invention may include at least one terminal hydroxyl group, and in some embodiments, at least one terminal hydroxyl group and one or more carboxylic acid groups. In another embodiment, the polyester polyol intermediates include two terminal hydroxyl groups, and in some embodiments, two hydroxyl groups and one or more, or two, carboxylic acid groups. The polyester polyol intermediates are generally a substantially linear, or linear, polyester having a number average molecular weight (Mn) of from 500 to 10,000, 500 to 5000, or from 1000 to 3000, or 2000.

In some embodiments, the poly(dialkylene ester) polyol intermediate may have a low acid number, such as less than 1.5, less than 1.0, or even less than 0.8. A low acid number for the poly(dialkylene ester) polyol intermediate may generally provide improved hydrolytic stability in the resulting TPU polymer. The acid number may be determined by ASTM D-4662 and is defined as the quantity of base, expressed in milligrams of potassium hydroxide that is required to titrate acidic constituents in 1.0 gram of sample. Hydrolytic stability can also be improved by adding hydrolytic stabilizers to the TPU which are known to those skilled in the art of formulating TPU polymers.

Dialkylene glycols suitable for use in preparing the poly(dialkylene ester) polyol intermediate of the present invention may be aliphatic, cyclo-aliphatic, aromatic, or combinations thereof. Suitable glycols may contain from 2 or 4 or 6 to 20, 14, 8, 6 or 4 carbon atoms, and in some embodiments may contain 2 to 12, 2 to 8 or 6, 4 to 6, or even 4 carbon atoms. In some embodiments, the dialkylene glycol includes oxydimethanol, diethylene glycol, dipropylene glycol, 3,3-oxydipropan-1-ol, dibutylene glycol, or combinations thereof. In other embodiments, one or more of the dialkylene glycols listed may be excluded from the present invention. Blends of two or more glycols may be used. In some embodiments, monoalkylene glycols may be used in combination with the dialkylene glycols described above. In other embodiments, the glycol used to prepare the poly(dialkylene ester) polyol intermediate is free of monoalkylene glycols.

Dicarboxylic acids suitable for use in preparing the poly(dialkylene ester) polyol intermediate of the present invention may be aliphatic, cyclo-aliphatic, aromatic, or combinations thereof. Suitable acids may contain from 2, 4, or 6 to 20, 15, 8, or 6 carbon atoms, and in some embodiments may contain 2 to 15, 4 to 15, 4 to 8, or even 6 carbon atoms. In some embodiments, the dicarboxylic acids include succinic acid, glutaric acid, adipic acid, pimelic acid, suberic acid, azelaic acid, sebacic acid, dodecanedioic acid, isophthalic acid, terephthalic acid, cyclohexane dicarboxylic acid, or combinations thereof. In other embodiments, one or more of the dicarboxylic acids listed may be excluded from the present invention.

The polyester polyol intermediates of the present invention may also be derived from an ester or anhydride of one or more the dicarboxylic acids described above or combinations of such materials. Suitable anhydrides include succinic anhydride, alkyl and/or alkenyl succinic anhydride, phthalic anhydride and tetrahydrophthalic anhydride. In some embodiments, the acid is adipic acid. Blends of two or more acids may be used.

The polyester polyol intermediates of the present invention are prepared by reacting one or more of the dialkylene glycol described above with one or more of the dicarboxylic acids described above, and/or one or more of the esters or anhydrides thereof. In some embodiments, more than one equivalent of glycol is used for each equivalent of acid. The preparation includes (1) an esterification reaction of one or more dialkylene glycols with one or more dicarboxylic acids or anhydrides or (2) by transesterification reaction, i.e., the reaction of one or more dialkylene glycols with esters of dicarboxylic acids. Mole ratios generally in excess of more than one mole of glycol to acid are preferred so as to obtain linear chains having a preponderance of terminal hydroxyl groups.

In some embodiments, the poly(dialkylene ester) polyol intermediate of the present invention is used in combination with a polyether polyol intermediate and/or a conventional polyester intermediate. As used herein, the polyester polyol intermediates of the present invention may include a mixture of polyester and polyether linkages, but may not contain only polyether linkages or, in some embodiments, more than 70% polyether linkages, relative to the total amount of polyether and polyester linkages. In other embodiments, the compositions of the present invention are substantially free, or free of, polyether polyol intermediates, and such materials are not used in the preparation, where polyether polyol intermediates as used herein can mean intermediates containing only polyether linkages, or containing less than 50, 40, 20, or even 15 percent polyester linkages.

In some embodiments, the poly(dialkylene ester) polyol intermediate of the present invention is used in combination with a polyether polyol intermediate and/or a conventional polyester intermediate. In such embodiments, the ratio of the poly(dialkylene ester) polyol intermediate to the polyether polyol and/or conventional polyester intermediate is 10:90 to 90:10, 25:75 to 75:25, or 60:40 to 40:60. In some embodiments, the ratio is such that no more than 50% by weight of the overall composition is polyether polyol and/or conventional polyester intermediate.

As noted above, the poly(dialkylene ester) thermoplastic polyurethane is made by reacting (i) at least one poly(dialkylene ester) polyol intermediate with (ii) at least one diisocyanate and (iii) at least one chain extender. Suitable diisocyanates include: (i) aromatic diisocyanates such as: 4,4'-methylenebis-(phenyl isocyanate) (MDI), m-xylylene diisocyanate (XDI), phenylene-1,4-diisocyanate, 1,5-naphthalene diisocyanate, diphenylmethane-3,3'-dimethoxy-4,4'-diisocyanate (TODI), and toluene diisocyanate (TDI); as well as (ii) aliphatic diisocyanates such as: isophorone diisocyanate (IPDI), 1,4-cyclohexyl diisocyanate (CHDI), decane-1,10-diisocyanate, hexamethylene diisocyanate (HDI), and dicyclohexylmethane-4,4'-diisocyanate. In some embodiments, the diisocyanate is 4,4'-methylenebis(phenyl isocyanate) (MDI). In other embodiments, one or more of the diisocyanates listed may be excluded from the present invention.

A mixture of two or more diisocyanates can be used. Also, small amounts of isocyanates having a functionality greater than 2, such as tri-isocyanates can be used together with the diisocyanates. Large amounts of isocyanates with a functionality of 3 or more should be avoided as they will cause the TPU polymer to be cross linked.

As noted above, the poly(dialkylene ester) thermoplastic polyurethane is made by reacting (i) at least one poly(dialkylene ester) polyol intermediate with (ii) at least one diisocyanate and (iii) at least one chain extender. Suitable chain extenders include glycols and can be aliphatic, aromatic or combinations thereof. In some embodiments, the chain extender is an aromatic glycol, or a mixture of chain extenders is used which includes an aromatic glycol.

In some embodiments, the chain extenders are glycols having from 2 to 12 carbon atoms. In some embodiments, the glycol chain extenders are lower aliphatic or short chain glycols having from 2 to 10 carbon atoms and include, for instance: ethylene glycol, diethylene glycol, propylene glycol, dipropylene glycol, 1,4-butanediol, 1,6-hexanediol, 1,3-butanediol, 1,5-pentanediol, 1,4-cyclohexanedimethanol (CHDM), neopentylglycol, and the like. In some embodiments, the chain extender includes 1,4-butanediol. In some embodiments, the chain extender, and/or the overall TPU, is essentially free of, or even completely free of CHDM.

Aromatic glycols may also be used as the chain extender to make the TPU including benzene glycol and xylene glycol. Xylene glycol is a mixture of 1,4-di(hydroxymethyl)benzene and 1,2-di(hydroxymethyl)benzene. Benzene glycol specifically includes hydroquinone, i.e., hydroquinone bis(hydroxylethyl ether) or bis(beta-hydroxyethyl)ether also known as 1,4-di(2-hydroxyethoxy)benzene and often referred to as HQEE; resorcinol, i.e., bis(beta-hydroxyethyl)ether also known as 1,3-di(2-hydroxyethyl)benzene; catechol, i.e., bis(beta-hydroxyethyl)ether also known as 1,2-di(2-hydroxyethoxy)benzene; and combinations thereof. In some embodiments, the chain extender is HQEE.

A mixture of two or more glycols may be used as the chain extender. In some embodiments, the chain extender is a mixture of HQEE and at least one other chain extender, such as 1,4-butanediol and/or 1,6-hexanediol. In other embodiments, one or more of the chain extenders listed may be excluded from the present invention.

Diamines may also be used as a chain extender, as is well known in the art. In one embodiment of the present invention, the chain extender contains a diamine as a co-chain extender in combination with one or more of the chain extenders described above, such as HQEE. In other embodiments, the present invention does not use any diamines in the preparation of its compositions.

In still other embodiments, the chain extender used in the present invention is essentially free or, or even completely free of, butanediol, ethylene glycol, and/or the diamine co-chain extenders as describe above.

The thermoplastic polyurethane compositions of the present invention may also include a solid. The thermoplastic polyurethane compositions may be from 1 to 99 percent by weight polyurethane elastomer and from 99 to 1 percent by weight of a solid, wherein the solid is incorporated in the thermoplastic polyurethane elastomer. The solid content may also be from 3 to 95, 5 to 97, 10 to 90, or even 5 to 20 or 10 to 20 percent by weight, with the balance of the composition being the polyurethane elastomer.

Suitable solids are mainly inorganic solids, preferably inorganic basic solids selected from the class consisting of oxides, compound oxides, silicates, sulfates, carbonates, phosphates, nitrides, amides, imides and carbides of the elements of the 1st, 2nd, 3rd or 4th main group or the 4th subgroup of the periodic table.

Particular examples are: oxides, such as calcium oxide, silica, alumina, magnesium oxide and titanium dioxide, mixed oxides, for example, of the elements silicon, calcium, aluminum, magnesium and titanium; silicates, such as ladder-type, ino-, phyllo- and tectosilicates, preferably wollastonite, in particular hydrophobicized wollastonite, sulfates, such as those of alkali metals and alkaline-earth metals; carbonates, for example, those of alkali metals and alkaline-earth metals, for example, calcium, magnesium, barium, lithium, potassium and sodium carbonate; phosphates, such as apatites; nitrides; amides; imides; carbides; polymers, such as polyethylene, polypropylene, polystyrene, polytetrafluoroethylene and polyvinylidene fluoride; polyamides; polyimides; and other thermoplastics, thermosets and microgels, solid dispersions, in particular those which comprise the polymers mentioned above, and also mixtures of two or more of the above mentioned solids.

Particularly to be mentioned are: Wollastonite (CaSiO₃), CaCO₃, mixed oxides or carbonates of Mg and Ca, such as dolomite, in the ground and precipitated form, respectively, silicates (SiO₂), talc (SiO₂*MgO), Al₂O₃, kaolin (Al₂O₃*SiO₂), and synthesized ceramics, polymer powders which do not solve into electrolyte solvents, preferably those as specifically mentioned above, and surface-treated fillers, which have been treated with e.g., silane coupling agents which are electrochemically stable.

According to the invention, the solids used may also be inorganic Li-ion-conducting solids, preferably an inorganic basic Li-ion-conducting solid.

Examples of these are: lithium borates, such as Li₄B₆O₁₁*xH₂O, Li₃ (Bo₂)₃, Li₂B₄O₇*xH₂O, LiBO₂, where x can be a number from 0 to 20; lithium aluminates, such as Li₂O*Al₂O₃*H₂O, Li₂Al₂O₄, LiAlO₂; lithium aluminosilicates, such as lithium-containing zeolites, feldspars, feldspathoids, phyllo- and inosilicates, and in particular LiAlSi₂O₆ (spodumene), LiAlSiO₁₀ (petullite), LiAlSiO₄ (eucryptite), micas, such as K[Li,Al]₃[AlSi]₄O₁₀(F-OH)₂/K[Li,Al,Fe]₃ [AlSi]₄O₁₀ (F-OH)₂; lithium zeolites, in particular those whose form is fiber-like, sheet-like or cube-like, in particular those of the formula Li₂/z O*Al₂O₃*xSiO₂*yH₂O where z corresponds to the valence, x is from 1.8 to 12 and y is from 0 to 8; lithium carbides, such as Li₂C₂, Li₄C; Li₃N; lithium oxides and lithium mixed oxides, such as LiAlO₂, Li₂MnO₃, Li₂ O, Li₂O₂, Li₂MnO₄, Li₂TiO₃; Li₂NH; LiNH₂; lithium phosphates, such as Li₃PO₄, LiPO₃, LiAlFPO₄, LiAl(OH)PO₄, LiFePO₄, LiMnPO₄; Li₂CO₃; lithium silicates in the form of ladder-type, ino-, phyllo- and tectosilicates, such as Li₂ SiO₃, Li₂SiO₄, Li₂S-SiS₂, and mechanically milled products from Li₂S, SiS₂ and Li₄SiO₂, wherein the most preferably product constituted by these three compounds has the following composition: 95 wt-% (0,6 Li₂S 0,4 SiS₂) 5 wt-% Li₄SiO₄, and Li₆Si₂ ; lithium sulfates, such as Li₂SO₄, LiHSO₄, LiKSO₄; the Li compounds mentioned during the discussion of the cathode layer, the presence of conductive carbon black being excluded when these are used as solid III; and also mixtures of two or more of the Li-ion-conducting solids mentioned above.

In some embodiments, the thermoplastic polyurethane compositions of the present invention may further comprise a metal-containing salt, salt complex, or salt compound formed by the union of metal ion with a non-metallic ion or molecule. Examples of salts useful in the present invention include: LiClO₄, LiN(CF₃SO₂)₂, LiPF₆, LiAsF₆, Lil, LiCl, LiBr, LiSCN, LiSO₃ CF₃, LiNO₃, LiC(SO₂CF₃)₃, Li₂S, and LiMR₄, where M is Al or B, and R is a halogen, hydrocarbyl, alkyl or aryl group. In one embodiment, the salt is the lithium salt of trifluoromethane sulfonic acid, or LiN(CF₃SO₂)₂, which is commonly referred to as lithium trifluoromethane sulfonamide. The effective amount of the selected salt added to the one-shot polymerization may be at least about 0.10, 0.25, or even 0.75 parts by weight based on 100 parts by weight of the polymer.

Suitable salts also include halogen-free lithium-containing salt. In some embodiments, the salt is represented by the formula: 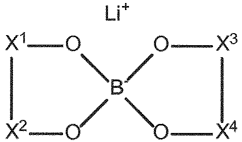 wherein each -X¹-, -X²-, -X³- and -X⁴- is independently -C(O)-, -C(R¹R²)-, -C(O)-C(R¹R²)- or -C(R¹R²)-C(R¹R²)- where each R¹ and R² is independently hydrogen or a hydrocarbyl group and wherein the R¹ and R² of a given X group may be linked to form a ring. In some embodiments, the salt is represent by the formula above wherein -X¹-, -X²-, -X³- and -X⁴- are -C(O)-. Suitable salts also include the open, -ate structures of such salts, including Lithium bis(oxalate)borate. In some embodiments, the halogen-free lithium-containing salt comprises lithium bis(oxalato)borate, lithium bis(glycolato)borate, lithium bis(lactato)borate, lithium bis(malonato)borate, lithium bis(salicylate)borate, lithium (glycolato,oxalato) borate, or combinations thereof.

In other embodiments, the thermoplastic polyurethane compositions of the present invention are substantially free to completely free of any or all of the solids and/or metal containing salts described herein. In some embodiments, the thermoplastic polyurethane compositions contain less than 10% by weight of such materials, and in other embodiments less than 8%, 6%, 5%, 3%, or even 2% by weight of such materials.

The solids, when present, may be substantially insoluble in the liquid used as electrolyte, and also be electrochemically inert in the battery medium. In some embodiments, the solids are basic solids. For the purposes of the invention, basic solids are those whose mixture with a liquid water-containing diluent, which itself has a pH of not more than 7, has a higher pH than this diluent. In some embodiments, the solids have a primary particle size of from 5 nm to 25 µm, preferably from 0.01 to 10 µm and in particular from 0.01 to 5 µm, and more particular 0.02 to 1 µm, the particle sizes given being determined by electron microscopy. The melting point of the solids is preferably above the usual operating temperature of the electrochemical cell, and melting points of above 120°C, in particular above 150°C, have proven particularly advantageous. The solids here may be symmetrical in their external shape, i.e., have a dimensional ratio of height:width:length (aspect ratio) of about 1 and be shaped as spheres or pellets, be approximately round in shape, or else be in the shape of any desired polyhedron, such as a cuboid, tetrahedron, hexahedron, octahedron or bipyramid, or may be distorted or asymmetric, i.e., have a dimensional ratio height:width:length (aspect ratio) which is not equal to 1 and be, for example, in the form of needles, asymmetrical tetrahedra, asymmetrical bipyramids, asymmetrical hexa- or octahedra, lamellae or plates, or have fiber-like shape. If the solids are asymmetric particles, the upper limit given above for the primary particle size refers to the smallest axis in each case.

The thermoplastic polyurethane compositions according to the invention may also comprise other thermoplastic polymers, such as polyethylene oxide, copolymers on the basis of polyvinylidenedifluoride, polyacrylonitrile and poly(meth)acrylates, such as poly(methyl methacrylate). When using these other polymers, the ratio thereof may be within the range of 5 to 400 parts by weight based on 100 parts by weight of the thermoplastic polyurethane elastomer.

The above defined thermoplastic polyurethane elastomers may be produced according to commonly known processes.

In some embodiments, the poly(dialkylene ester) thermoplastic polyurethane of the invention is blended with a matrix or base polymer to form a polymer blend. These blends may also be made with the salt-modified polymers described herein.

Suitable base polymers as defined herein can be a homopolymer or a copolymer. The base polymer may be a blend of multiple base polymers, and may further include any of the additional additives described above, including ESD (electrostatic dissipative) additives. In some embodiments, the base polymer, and/or the compositions of the present invention, are substantially free to free of ESD additives.

The base polymer may include:
(i) a polyolefin (PO), such as polyethylene (PE), polypropylene (PP), polybutene, ethylene propylene rubber (EPR), polyoxyethylene (POE), cyclic olefin copolymer (COC), or combinations thereof;
(ii) a styrenic, such as polystyrene (PS), acrylonitrile butadiene styrene (ABS), styrene acrylonitrile (SAN), styrene butadiene rubber (SBR or HIPS), polyalphamethylstyrene, methyl methacrylate styrene (MS), styrene maleic anhydride (SMA), styrene-butadiene copolymer (SBC) (such as styrene-butadienestyrene copolymer (SBS) and styrene-ethylene/butadiene-styrene copolymer (SEBS)), styrene-ethylene/propylene-styrene copolymer (SEPS), styrene butadiene latex (SBL), SAN modified with ethylene propylene diene monomer (EPDM) and/or acrylic elastomers (for example, PS-SBR copolymers), or combinations thereof;
(iii) a thermoplastic polyurethane (TPU);
(iv) a polyamide, such as Nylon™, including polyamide 6,6 (PA66), polyamide 11 (PA11), polyamide 12 (PA12), a copolyamide (COPA), or combinations thereof;
(v) an acrylic polymer, such as poly(methyl acrylate), poly(methyl methacrylate), or combinations thereof;
(vi) a polyvinylchloride (PVC), a chlorinated polyvinylchloride (CPVC), or combinations thereof;
(vii) a polyoxymethylene, such as polyacetal;
(viii) a polyester, such as polyethylene terephthalate (PET), polybutylene terephthalate (PBT), copolyesters and/or polyester elastomers (COPE) including polyether-ester block copolymers such as glycol modified polyethylene terephthalate (PETG) poly(lactic acid) (PLA), or combinations thereof;
(ix) a polycarbonate (PC), a polyphenylene sulfide (PPS), a polyphenylene oxide (PPO), or combinations thereof;
or combinations thereof.

The thermoplastic polyurethane compositions according to the invention may also contain a plasticizer. The plasticizers used may be aprotic solvents, preferably those which solvate Li ions, for example, dimethyl carbonate, diethyl carbonate, dipropyl carbonate, diisopropyl carbonate, dibutyl carbonate, ethylene carbonate and propylene carbonate; oligoalkylene oxides, such as dibutyl ether, di-tert-butyl ether, dipentyl ether, dihexyl ether, diheptyl ether, dioctyl ether, dinonyl ether, didecyl ether, didodecyl ether, ethylene glycol dimethyl ether, ethylene glycol diethyl ether, 1-tert-butoxy-2-methoxyethane, 1-tert-butoxy-2-ethoxyethane, 1,2-dimethoxypropane, 2-methoxyethyl ether, 2-ethoxyethyl ether, diethylene glycol dibutyl ether, diethylene glycol tert-butyl methyl ether, triethylene glycol dimethyl ether, tetraethylene glycol dimethyl ether, gamma-butyrolactone and dimethylformamide; hydrocarbons of the formula Cn H₂n+2 where 7<n<50; organic phosphorus compounds, in particular phosphates and phosphonates, such as trimethyl phosphate, triethyl phosphate, tripropyl phosphate, tributyl phosphate, triisobutyl phosphate, tripentyl phosphate, trihexyl phosphate, trioctyl phosphate, tris(2-ethylhexyl)phosphate, tridecyl phosphate, diethyl n-butyl phosphate, tris(butoxyethyl)phosphate, tris(2-methoxyethyl) phosphate, tris(tetrahydrofuryl)phosphate, tris(1H,1H,5H-octafluoropentyl) phosphate, tris(1H, 1H-trifluoroethyl)phosphate, tris(2-(diethylamino)ethyl) phosphate, diethyl ethylphosphonate, dipropyl propylphosphonate, dibutyl butylphosphonate, dihexyl hexylphosphonate, dioctyl octylphosphonate, ethyl dimethylphosphonoacetate, methyl diethylphosphonoacetate, triethyl phosphonoacetate, dimethyl 2-oxopropylphosphonate, diethyl 2-oxopropylphosphonate, dipropyl 2-oxopropylphosphonate, ethyl diethoxyphosphinylformate, trimethyl phosphonoacetate, triethyl phosphonoacetate, tripropyl phosphonoacetate and tributyl phosphonoacetate; organic sulfur compounds, such as sulfates, sulfonates, sulfoxides, sulfones and sulfites, for example dimethyl sulfite, diethyl sulfite, glycol sulfite, dimethyl sulfone, diethyl sulfone, ethylpropyl sulfone, dipropyl sulfone, dibutyl sulfone, tetramethylene sulfone, methylsulfolane, dimethyl sulfoxide, diethyl sulfoxide, dipropyl sulfoxide, dibutyl sulfoxide, tetramethylene sulfoxide, ethyl methanesulfonate, 1,4-butanediol bis(methanesulfonate), diethyl sulfate, dipropyl sulfate, dibutyl sulfate, dihexyl sulfate, dioctyl sulfate and SO₂ClF; and nitriles, such as acrylonitrile; dispersants, in particular those with surfactant structure; and mixtures of these.

The thermoplastic polyurethane compositions of the present invention may further include additional useful additives, where such additives can be utilized in suitable amounts. These optional additional additives include mineral and/or inert fillers, lubricants, processing aids, antioxidants, hydrolytic stabilizers, acid scavengers, and other additives as desired. Useful fillers include diatomaceous earth (superfloss) clay, silica, talc, mica, wallostonite, barium sulfate, and calcium carbonate. If desired, useful antioxidants include phenolic antioxidants. Useful lubricants include metal stearates, paraffin oils and amide waxes. Additives can also be used to improve the hydrolytic stability of the TPU polymer. Each of these optional additional additives described above may be present in, or excluded from, the thermoplastic polyurethane compositions of the invention.

When present, these additional additives may be present in the thermoplastic polyurethane compositions of the present invention from 0 or 0.01 to 5 or 2 weight percent of the composition. These ranges may apply separately to each additional additive present in the composition or to the total of all additional additives present.

The composition according to the invention may be dissolved and dispersed in an inorganic, but preferably organic liquid diluent, the resulting mixture being intended to have a viscosity of preferably 100 to 50,000 mPas, and then applying this solution or dispersion in a manner known per se, such as by casting, spraying, pouring, dipping, spin coating, roller coating or printing--by relief, intaglio, planographic or screen printing--to a carrier material. Subsequent processing can be done by customary methods, for example, by removing the diluent and curing the binder.

Suitable organic diluents are aliphatic ethers, especially tetrahydrofuran and dioxane, hydrocarbons, especially hydrocarbon mixtures such as petroleum spirit, toluene and xylene, aliphatic esters, especially ethyl acetate and butyl acetate, and ketones, especially acetone, ethyl methyl ketone, cyclohexanone, diethylformamide, chloroform, 1,1,2,2 tetrachloroethane, 1,1,1 trichloroethane, and diethylacetamide. Mixtures of such diluents can also be employed.

Suitable carrier materials are those materials customarily used for electrodes, preferably metals such as aluminum and copper. It is also possible to use temporary supports, such as films, especially polyester films such as polyethylene terephthalate films. Such films may advantageously be provided with a release layer, preferably comprising polysiloxanes.

In some embodiments, the diisocyanate used in the preparation of the composition describe above comprises: 4,4'-methylenebis-(phenyl isocyanate); hexamethylene diisocyanate; 3,3'-dimethylbiphenyl-4,4'-diisocyanate; m-xylylene diisocyanate; phenylene-1,4-diisocyanate; naphthalene-1,5-diisocyanate; diphenylmethane-3,3'-dimethoxy-4,4'-diisocyanate; toluene diisocyanate; isophorone diisocyanate; 1,4-cyclohexyl diisocyanate; decane-1,10-diisocyanate; dicyclohexylmethane-4,4'-diisocyanate; or combinations thereof; and the chain extender used in the preparation of the composition describe above comprises: hydroquinone bis (beta-hydroxyethyl) ether; ethylene glycol; diethylene glycol; propylene glycol; dipropylene glycol; 1,4-butanediol; 1,6-hexanediol; 1,3-butanediol; 1,5-pentanediol; di(hydroxyethyl) ether; neopentylglycol; or combinations thereof.

In some embodiments, the poly(dialkylene ester) polyol intermediate used in the preparation of the compositions describe above comprises poly(diethylene glycol adipate), and the diisocyanate comprises 4,4'-methylenebis-(phenyl isocyanate); and the chain extender comprises butanediol, benzene glycol, or combinations thereof.

In any of the above described embodiments, the thermoplastic polyurethane compositions may be made from a polyester polyol component substantially free of polyether polyols. In still other embodiments, the thermoplastic polyurethane compositions may further comprise at least one base polymer. Suitable base polymer include: a polyolefin; a styrenic resin; a thermoplastic polyurethane, a polyamide; an acrylic polymer; a polyvinylchloride; a polyvinylidene fluoride; a polyethylene oxide; an ethylene oxide-propylene oxide copolymer; a polyacrylonitrile; a polyoxymethylene; a polyester; a polycarbonate; a polyphenylene oxide; polyphenylene sulfide; or combinations thereof.

According to the invention, fillers are used in the thermoplastic polyurethane compositions of the invention which fillers are selected from the group consisting of nanofillers and nanofibers.

### The Electrochemical Cell

The present invention relates to an electrochemical cell which comprises a membrane as defined above. According to another aspect of the present invention, there is provided a lithium battery containing the described membrane. Furthermore, it relates to the use of the membrane as defined herein as a separator in electrochemical cells such as a lithium battery. Electrochemical cells include batteries, such as the lithium ion batteries noted herein, and also include capacitors and similar devices, such as electric double-layer capacitors also referred to as super capacitors or ultra-capacitors.

Operatively, disposed between the positive and negative electrodes is an electrolyte system. The electrolyte system typically includes an organic polymeric support structure adapted to engage, as for example, by absorption, an electrochemically active species or material. The electrochemically active material may be a liquid electrolyte, such as a metal salt that is dissolved in an organic solvent and which is adapted to promote ion transport between said positive and negative electrodes.

As outlined above, the present invention provides a membrane to be suitably used in particular as a separator in electrochemical cells which has the following desired characteristics: (a) the lithium ion-transfer through the membrane according to the invention is considerably good; (b) the membrane according to the invention is heat-stable and exhibits no shrinkage below 200°C; (c) the membrane may be bended at 180°C without causing any damages to said membrane, which is particularly important for prismatic cells, i.e. those of the rectangular type, in which these membranes may be particularly suitably used as separators; (d) the membrane as provided has also elastic properties and thus is able to keep good contact with anode and/or cathode; (e) the membrane may be heat laminated on a cathode or anode surface, which ensures the desired good contact between these surfaces and the membrane according to the invention; (f) even after electrolyte immersion, the mechanical strength of the membrane according to the invention is very good; (g) the production of said membrane is to be regarded as very economical; (h) the membrane according to the invention has a good wettability for electrolyte solutions.

The electrochemical cells of the invention generally include a positive electrode and a negative electrode. The positive electrode may be fabricated of any of a number of chemical systems known to those of ordinary skill in the art. Examples of such systems include, but are not limited to, manganese oxide, nickel oxide, cobalt oxide, vanadium oxide, and combinations thereof. The negative electrode may likewise be fabricated from any of a number of electrode materials known to those of ordinary skill in the art. Selection of the negative electrode material is dependent on the selection of the positive electrode so as to assure an electrochemical cell which will function properly for a given application. Accordingly, the negative electrode may be fabricated from, for example, alkali metals, alkali metal alloys, carbon, graphite, petroleum coke, and combinations thereof.

The invention provides for an electrochemical cell comprising a positive electrode, a negative electrode, a polymer electrolyte disposed between said positive and negative electrodes, and a separator membrane disposed between said positive and negative electrodes, where the membrane can be any of those described above. In some embodiments, the electrochemical cell also includes: (I) electrodes comprising a poly(dialkylene ester) thermoplastic polyurethane composition; (II) a polymer electrolyte disposed between said positive and negative electrodes, wherein the polymer electrolyte comprises (A) a poly(dialkylene ester) thermoplastic polyurethane composition and (B) an electrochemically active electrolyte species; or (III), both (I) and (II). Each of the poly(dialkylene ester) thermoplastic polyurethane compositions may be any of the materials described above and in some embodiments is made by reacting (i) at least one poly(dialkylene ester) polyol intermediate with (ii) at least one diisocyanate and (iii) at least one chain extender, wherein (i), the polyester polyol intermediate, comprises an intermediate derived from at least one dialkylene glycol and at least one di-carboxylic acid, or an ester or anhydride thereof. In some embodiments the chain extender comprises hydroquinone bis (beta-hydroxyethyl) ether.

The electrochemical cells of the invention may have a charge/discharge cycle life of >500, >750 or even >1000 cycles. The electrochemical cells of the invention may have a charge/discharge efficiency of >90% or even >95% after 500 cycles. The electrochemical cells of the invention may have an operation window of -30 to 100°C, where any one or any combination of these performance characteristics are met over the defined operation window. The electrochemical cells of the invention may be essentially free of any rigid metallic casing and may even be completely free of any rigid metallic casing. The electrochemical cells of the invention may be a pouch type battery.

In still further embodiments, the electrochemical cells of the invention meet at least one of, or any combination of the following characteristics: (i) a charge/discharge cycle life of >500, >750 or even >1000 cycles; (ii) a charge/discharge efficiency of >90% or even >95% after 500 cycles; (iii) an operation window of -30 to 100 or -0 to 70°C.

In some embodiments, the poly(dialkylene ester) thermoplastic polyurethane compositions of the present invention, as well as the membranes, and/or electrochemical cells made using such polyurethane compositions, are substantially free of inorganic solids. By substantially free, it is meant that the composition contains <10% by weight inorganic solids, or even <5% by weight or <1% by weight inorganic solids. In still other embodiments, the compositions are essentially free of, or even completely free of inorganic solids.

An electrolytic solution of the electrochemical cell includes a lithium salt. Any lithium compound that dissolves in an organic solvent to produce lithium ions can be used as a lithium salt. For example, at least one ionic lithium salt such as lithium perchlorate (LiClO₄), lithium tetrafluoroborate (LiBF₄), lithium hexafluorophosphate (LiPF₆), lithium trifluoromethanesulfonate (LiCF₃SO₃), and lithium bis(trifluoromethanesulfonyl) amide (LiN(CF₃SO₂)₂) can be used. The halogen free salts described above may also be used, including lithium bis(oxalato)borate, lithium bis(glycolato)borate, lithium bis(lactato)borate, lithium bis(malonato)borate, lithium bis(salicylate)borate, lithium (glycolato,oxalato) borate, or combinations thereof. A concentration of the lithium salt may be in the range of 0.5-2.0M. If the concentration of the lithium salt is outside of this range, ionic conductivity may be undesirably low. An organic electrolytic solution containing such an inorganic salt is used so that a path through which lithium ions flow in a current flow direction can be formed.

Examples of the organic solvent for the electrolytic solution suitable for the present invention include polyglymes, oxolanes, carbonates, 2-fluorobenzene, 3-fluorobenzene, 4-fluorobenzene, dimethoxyethane, and diethoxyethane. These solvents may be used individually or in a combination of two or more.

Examples of polyglymes include diethyleneglycol dimethylether (CH₃(OCH₂CH₂)₂OCH₃), diethyleneglycol diethylether (C₂H₅(OCH₂CH₂)2OC₂H₅), triethyleneglycol dimethylether (CH₃(OCH₂CH₂)₃ OCH₃), and triethyleneglycol diethylether (C₂H₅(OCH₂CH₂)₃OC₂H₅). These polyglymes may be used individually or in a combination of two or more.

Examples of dioxolanes include 1,3-dioxolane, 4,5-diethyl-dioxolane, 4,5-dimethyl-dioxolane, 4-methyl-1,3-dioxolane, and 4-ethyl-1,3-dioxolane. These dioxolanes may be used individually or in a combination of two or more. Examples of carbonates include methylene carbonate, ethylene carbonate, diethyl carbonate, dimethyl carbonate, gamma-butyrolactone, propylene carbonate, dimethyl carbonate, methylethyl carbonate, diethyl carbonate, and vinylene carbonate. These carbonates may be used individually or in a combination of two or more.

The organic solvent may be a mixture of ethylene carbonate (EC), ethylmethyl carbonate (EMC), propylene carbonate (PC), and fluorobenzene (FB); and a mixture of diglyme (DGM) (also called as "diethyleneglycol dimethylether"), dimethoxyethane (DME), and 1,3-dioxolane (DOX).

The amount of the organic solvent is the same as that of an organic solvent used in a conventional lithium battery.

The electrolytic solution according to an embodiment of the present invention is added by using the conventional methods when manufacturing lithium batteries. The conventional methods include, but are not limited to, the following methods: (1) A method including injecting the electrolytic solution into a capsulated electrode assembly, which includes a cathode, an anode and a separator; (2) A method including: coating electrodes or a separator with a polymer electrolyte containing a matrix forming resin and the electrolytic solution; forming an electrode assembly using the coated electrodes and separator; and sealing the electrode assembly in a battery case; or (3) A method including: coating electrodes or a separator with a polymer electrolyte containing a matrix forming resin and the electrolytic solution; forming an electrode assembly using the coated electrodes and separator; sealing the electrode assembly in a battery case; and polymerizing inside of the battery. Here, this method can be applied when a free polymer or polymerization monomer is used as the matrix forming resin.

Any material that is commonly used as a binder of an electrode plate can be used as a matrix forming polymer resin in the method according to the present invention without limitation. Examples of the matrix forming polymer resin include vinylidene fluoride/hexafluoropropylene copolymer, polyvinylidenefluoride, polyacrylonitrile, polymethylmethacrylate and combinations of these materials.

The matrix forming polymer resin may further include a filler that enhances mechanical strength of the polymer electrolyte. Examples of the filler include silica, kaolin, and alumina. In addition, the matrix forming polymer resin can further include a plasticizer if needed.

The electrolytic solution according to the present invention can be used in common lithium batteries, such as primary batteries, secondary batteries, and sulfur batteries.

The electrolytic solution according to the present invention can be used in cylindrical and rectangular lithium batteries, without limitation.

In some embodiments, the invention further provides for an electrolyte system which combines the mechanical stability and freedom from leakage offered by solid electrolytes with the high ionic conductivities of liquid electrolytes. The electrolyte system may comprise an organic polymeric support structure adapted to engage, as for example, by absorption, an electrochemically active species or material. The electrochemically active material may be a liquid electrolyte, such as a metal salt that is dissolved in an organic solvent and which is adapted to promote ion transport between the positive and negative electrodes of an electrochemical cell (or battery).

The liquid electrolyte absorbed by the organic support structure may be selected to optimize performance of the positive and negative electrodes. In one embodiment, for a lithium based electrochemical cell, the liquid electrolyte absorbed by the organic support structure is typically a solution of an alkali metal salt, or combination of salts, dissolved in an aprotic organic solvent or solvents. Typical alkali metal salts include, but are not limited to, salts having the formula M⁺X⁻ where M⁺ is a alkali metal cation such as Li⁺, Na⁺, K⁺ and combinations thereof; and X⁻ is an anion such as Cl⁻, Br⁻, I⁻, ClO₄⁻, BF₄⁻, PF₅⁻, AsF₆⁻, SbF₆⁻, CH₃CO₂⁻, CF₃SO₃⁻, (CF₃O₂)₂N⁻, (CF₃SO₂)₂N⁻, (CF₃SO₂)₃C⁻, B(C₂O₄)⁻, and combinations thereof. In some embodiments, these salts are all lithium salts. Aprotic organic solvents include, but are not limited to, propylene carbonate, ethylene carbonate, diethyl carbonate, dimethyl carbonate, dipropyl carbonate, dimethyl sulfoxide, acetonitrile, dimethoxyethane, diethoxyethane, tetrahydrofuran, ethyl methyl carbonate, and combinations thereof.

The organic polymeric support structure may be fabricated of any of the polyurethane elastomers compositions described above.

In some embodiments, the electrolyte system for an electrochemical cell comprises an electrolyte active species dispersed in a polymeric support structure comprising a poly(dialkylene ester) thermoplastic polyurethane composition made by reacting (i) at least one poly(dialkylene ester) polyol intermediate with (ii) at least one diisocyanate and (iii) at least one chain extender; wherein (i), the polyester polyol intermediate, comprises an intermediate derived from at least one dialkylene glycol and at least one di-carboxylic acid, or an ester or anhydride thereof.

The instant electrolyte system also has the important advantage of having a polymeric support structure which is easily processable and reprocessable, since the materials are thermoplastic elastomers. Other prior art gel systems are typically permanently chemically cross-linked either by radiation (e-beam, UV, etc.) or by using a chemical crosslinking agent, for example, diisocyanates which can be used to cross-link polyether triols.

In still other embodiments, the electrolyte system may be a polymer gel electrolyte system where the electrolyte system is a homogeneous gel that includes the poly(dialkylene ester) thermoplastic polyurethane composition described above, an alkali metal salt, and an aprotic organic solvent.

As noted above, any electrodes commonly used in electrochemical cells may be used in the electrochemical cells of the present invention.

In some embodiments, the electrodes used in the electrochemical cells of the present invention comprise: a composition of (A) the poly(dialkylene ester) thermoplastic polyurethane composition described above and (B) an electrode active material.

The electrode may be for a lithium battery where the electrode contains a poly(dialkylene ester) thermoplastic polyurethane composition and a cathode active material or an anode active material, both of which may be referred to as an electrode active material. The electrode may further include a conducting agent, an organic solvent, or both.

Any conventional organic solvent that is used in common batteries can be used in the present invention without particular limitation. However, the organic solvent may be a compound having relatively strong dipole moments. Examples of the compound include dimethylformamide (DMF), dimethylsulfoxide (DMSO), dimethyl acetamide (DMA), acetone, and N-methyl-2-pyrrolidone (hereinafter referred as NMP). In some embodiments, the solvent is NMP. The ratio of thermoplastic polyurethane compositions to the organic solvent may be 1:0.1 through 100 (by weight). If the ratio of the organic solvent is less than 0.1, the thermoplastic polyurethane compositions may not fully dissolve and cannot act as a binder. If the ratio of the organic solvent exceeds 100, the thermoplastic polyurethane compositions dissolves well, but a concentration of the active material solution may be too low, which may causing problems in the coating process.

Any conducting agent that is commonly used in the art can be used in the present invention without particular limitation. Examples of the conducting agent include carbon black and nickel powder. The amount of the conducting agent may be in the range of 0-10% by weight, preferably 1-8% by weight, based on the electrode composition. These conducting agents may be referred to as cathode or anode powders.

The electrode of the invention may be sheet-type electrodes or may be a coating on metallic foils. In some embodiments, the thermoplastic polyurethane compositions of the invention are used as a top coating layer of the electrode. The cathodes and anodes described herein, which contain the thermoplastic polyurethane compositions according to the present invention, can be used to manufacture an electrochemical cell such as a lithium battery.

In still further embodiments, the electrochemical cell may be what is referred to as a "solid state battery" where the cell contains solid electrodes and a solid electrolyte/separator system. Sometimes this solid electrolyte/separator system is referred to as a solid electrolyte that negates the need for a separator and/or membrane, but that is only because the solid electrolyte effectively acts as the separator and/or membrane. In such embodiments, the solid electrodes of the cell may be the thermoplastic polyurethane-based electrode described above, and the solid electrolyte/separator system can be the thermoplastic polyurethane-based separator compositions described above.

It is known that some of the materials described above may interact in the final formulation, so that the components of the final formulation may be different from those that are initially added. For instance, metal ions (of, e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

### EXAMPLES

The invention will be further illustrated by the following examples, which sets forth particularly advantageous embodiments.
In the following, only Examples 9 and 10 (Samples 10 to 16) are according to the invention. The other Examples and Samples are not according to the invention but are useful for understandig the invention.
In the experimentation set forth herein below, the following conversions apply:
1 mil = 25.4 µm
1 psi = 6890 Pa
1 Ibf = 4.5 N

### Example 1

The table below illustrates various TPU formulations including those prior art samples for comparison purpose. All samples are made with 4,4'-methylenebis-(phenyl isocyanate) (MDI) and are prepared using conventional TPU melt polymerization processing method. In this method, polyols, chain extenders (BDO or HQEE) and catalyst, if needed, are firstly blended and preheated at 120°C. MDI is melted and then mixed with the polyol blend under vigorous stirring for several minutes to polymerize the mixture. The resultant polymers are compression molded to thin membranes at temperatures above the melt points of TPUs for further testing.

**Table 1 - Chemical Compositions for Example 1**

| Sample No | Polyol | Chain Extender |
|---|---|---|
| Comparative 1 | 3000 MW poly(tetramethylene glycol adipate) | HQEE |
| Comparative 2 | 2000 MW ethylene oxide/propylene oxide polyol | HQEE |
| Comparative 3 | 1000 MW polyethylene glycol | BDO |
| Comparative 4 | 1000 MW polytetramethylene ether glycol | BDO |
| Comparative 5 | 1000 MW polytetramethylene ether glycol | HQEE |
| 1 | 3000 MW poly(diethylene glycol adipate) | HQEE |
| 2 | Mixture of 3000 MW poly(tetramethylene glycol adipate) and 3000 MW poly(diethylene glycol adipate) (50/50) | HQEE |

### Example 2

Table 2 below summarizes the results for the TPU samples in Example 1. Shore A hardness at 5 sec is tested in accordance with ASTM D-2240, and a higher number indicates a harder material. TPU membranes are dried in the vacuum oven at 80°C for 24 hr. and then immersed into liquid electrolyte for 12 hr. before being assembled between cathode and anode for conductivity test. Circular membrane samples swelled in both dimensions when soaked in electrolytes, and the dimensional changes as well as weight change are measured.

**Table 2 - Test Results of Samples in Example 1**

| Sample No | Hardness¹ | Li Ion Conductivity (mS/cm)² | Swelling³ | |
|---|---|---|---|---|
| | | | Radial (%) | Axial (%) |
| Comparative 1 | 87A | 0.05 | 22 | 19 |
| Comparative 2 | 88A | 0.86 | 59 | 2 |
| Comparative 3 | 90A | 0.38 | 41 | 0 |
| Comparative 4 | 82A | 0.30 | 1 | 5 |
| Comparative 5 | 80A | 0.11 | 0 | 6 |
| 1 | 89A | 1.24 | 29 | 7 |
| 2 | 89A | 1.18 | 29 | 20 |

| | | | | |
|---|---|---|---|---|
| 1 - Hardness is presented in a Shore A units, as measured by ASTM D-2240. 2 - Li ion conductivity is present in mS/cm. The values in the table above are averages of three separate test results. Results were obtained by dipping the dried membrane (dried in the vacuum oven at 80 °C for 24 hr) to be tested into a liquid electrolyte (1.2 M LiPF₆ in a 30:70 blend of ethylene carbonate: ethyl methyl carbonate) for 12 hours, then removing the membrane, wiping the both surfaces with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. 3 - Swelling is evaluated using a liquid electrolyte (1.2 M LiPF₆ in a 30:70 blend of ethylene carbonate:ethylmethyl carbonate). The dimension of film samples was measured before and after soaking in the liquid electrolyte for 12 hour. The axial swell = (thickness after soaking-thickness before soaking)/thickness before soaking×100%. The radial swell = (diameter after soaking-diameter before soaking)/diameter before soaking×100%. | | | | |

Conductivity higher than 10⁻³ S/cm is highly desired for Li-ion battery separators to ensure a low internal resistance, a high charge-discharge efficiency, and consequently, a low capacity loss during charge and discharge cycles. The results show that the compositions (Sample 1 and 2) of the present invention provide significantly higher conductivity compared to the comparative compositions. The conductivity of Samples 1 and 2 is 1.24 E-03 S/cm and 1.18 E-03 S/cm, respectively. Comparative Examples 4 and 5 have the lowest swellings comparing to others, but it has significantly lower conductivity than Samples 1 and 2. These inventive examples have a good overall balance of properties: (i) an average lithium ion conductivity of at least 1.00E-03 S/cm; (ii) a radial swell result of no more than ∼40%; and (iii) an axial swell result of no more than ∼20%.

### Example 3

Following the Example 1 and 2 study, a second TPU example set is prepared by continuous reactive extrusion. Table 3 illustrates the formulations of the TPU compositions tested. All examples are made with MDI.

**Table 3 - Chemical Compositions for Example 3**

| Sample No | Polyol | Chain Extender |
|---|---|---|
| 3 | 2000 MW poly(diethylene glycol adipate) | HQEE |
| 4 | 3000 MW poly(diethylene glycol adipate) | HQEE |
| 5 | Mixture of 3000 MW poly(tetramethylene glycol adipate) and 3000 MW poly(diethylene glycol adipate) (50/50) | HQEE |

### Example 4

Samples are extruded into thin films with thickness of 1.0 mil or less by melt cast process for evaluation, including thermal property, mechanical property, Li ion conductivity, thermal shrinkage, and swelling when exposed to common electrolyte systems. Comparative 6, commercial Celgard® 3501, is also tested as a benchmark. Table 4 - 6 below summarize the test results.

**Table 4 - Test Results of Dry Films of Example 3**

| Sample No | Hardness¹ | Thermal Properties² | | Puncture strength³ (lbf) | Tensile Properties⁴ | | Thermal Shrinkage⁵ | |
|---|---|---|---|---|---|---|---|---|
| | | T_{g} (°C) | Tₘ (°C) | | Stress @ Break (psi) | Strain @ Break (%) | Machine Direction (%) | Transverse Direction (%) |
| 3 | 85A | -23 | 177 | - | 6225 | 607 | 1.7 | 0.4 |
| 4 | 87A | -26 | 179 | - | 7310 | 583 | 1.1 | 0 |
| 5 | 84A | -30 | 168 | 4.8 (0.8 mil) | 8085 | 458 | 1.5 | 0 |
| Comparative 6* | - | - | - | 5.5 (1.0 mil) | - | - | <5.0** | 0** |

| | | | | | | | | |
|---|---|---|---|---|---|---|---|---|
| 1 - Hardness is presented in a Shore A units, as measured by ASTM D-2240. 2 - Tg and Tm were determined from differential scanning calorimetry curve. 3 - Puncture strength was tested in accordance with FTMS 101C-Method 2065. 4 - Mechanical properties were tested in accordance with ASTM D882. 5 - Thermal shrinkage was determined by measuring the TPU films' initial dimensions and then placing the samples in vacuum drying oven at 90°C for 1 hour. The final dimensions are then measured and shrinkage is calculated from the change in dimensions: Shrinkage (%) = (final dimension- initial dimension)/initial dimension×100%. Both machine direction and transverse direction were measured. * Comparative 6 is Celgard® 3501. **Data from Celgard® 3501 technical data sheet. | | | | | | | | |

**Table 5 - Test Results of Swollen Films with Electrolyte in Example 3.**

| Sample No | Electrolyte Absorption¹ (%) | Swelling² | | Tensile Properties³ | |
|---|---|---|---|---|---|
| | | Radial (%) | Axial (%) | Stress @ Break (psi) | Strain @ Break (%) |
| 3 | 226 | 38 | 17 | - | - |
| 4 | 203 | 40 | 7 | - | - |
| 5 | 206 | 44 | 15 | 1700 | 315 |

| | | | | | |
|---|---|---|---|---|---|
| 1 - Electrolyte takeup is measured by weighing the sample before and after soaking in electrolyte (1.2 M LiPF₆ in a 30:70 blend of ethylene carbonate:ethylmethyl carbonate) for 12h and calculating by equation: Electrolyte takeup (%) = (sample weight after soaking - sample weight before soaking)/sample weight before soaking×100%. 2 - Swelling is evaluated using a liquid electrolyte (1.2 M LiPF₆ in a 30:70 blend of ethylene carbonate:ethylmethyl carbonate). The dimension of film samples was measured by caliper before and after soaking in the liquid electrolyte for 12 hour. The axial swell (%) = (thickness after soaking-thickness before soaking)/thickness before soaking×100%. The radial swell (%) = (radius after soaking-radius before soaking)/radius before soaking×100%. 3 - Mechanical properties were tested on swollen film samples after 12 hours' soaking in electrolyte (1.2 M LiTFSI in a 30:70 blend of ethylene carbonate:ethylmethyl carbonate) in accordance with ASTM D882. | | | | | |

**Table 6 - Conductivity Test Results of Example 3.**

| Sample No | Li Ion Conductivity¹ (mS/cm) |
|---|---|
| 3 | 1.15 |
| 4 | 1.22 |
| 5 | 1.09 |

| | |
|---|---|
| 1 - Li ion conductivity is present in mS/cm. The values in the table above are averages of three separate test results. Results were obtained by dipping the dried membrane (stored at 80 °C in the vacuum oven for 24 hr) to be tested into a liquid electrolyte (1.2 M LiPF₆ in a 30:70 blend of ethylene carbonate: ethyl methyl carbonate) for 12 hours, then removing the membrane, wiping the both surfaces with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. | |

### Example 5

Coin cells (CR2016) are made of two circular electrode discs, LiFePO₄ cathode and an MCMB anode, and a separator, either Celgard® 3501 or TPU separator in between. In the case of Celgard® 3501, the porous film is used directly and for TPU separator, the films are immersed in electrolyte for 12 hours before assembly. All coin cells are assembled in an argon-filled glove box at oxygen level below 0.1 ppm and humidity level below 0.1 ppm. Electrode discs are punched out from the anode and cathode laminates. The cathode disc (1.4 mm) is placed in the center of the cathode case with LiFePO₄ side face up in a coin cell. A separator (1.6 mm for Celgard® 3501 and 1.4mm for TPU samples (after soaking the diameter can be as large as 1.9 mm) is placed concentric on top of the cathode. 6 drops of electrolyte are loaded on the surface of the Celgard® 3501, and in case of TPU separator, 2 drops of electrolyte are added. The anode disc is placed on the top of separator with MCMB side facing down. A stainless steel spacer is placed on the top of anode and followed by a stainless steel spring (Belleville Washers). The stack is then covered by the coin cell anode case and assembled with a hydraulic crimping machine (MTI Corporation) at 10 MPa. Electrolyte is prepared using 1.2 M LiTFSI in EC/EMC (30/70) blend.

Constant current charge and discharge test are conducted in Solartron 1470E Multistat (London Scientific, Canada) to evaluate the coin cell cycle life. The cut-off voltage is set from 2 V to 3.8 V with the cycle rate of 1 C. The test results are presented in Table 7. The capacity is measured in unit of mAh per gram of active materials (LiFePO₄ for cathode and MCMB for anode).

**Table 7 - Cell Charge/Discharge Cycle Test Results (Cycle # = 750)**

| Sample No | Initial Capacity (mAh/g) | Capacity after Cycling (mAh/g) | Capacity Retention after Cycling (%) | Charge/Discharge Efficiency after Cycling (%) |
|---|---|---|---|---|
| 4 | 124 | 95 | 77.2% | 94.3 |
| Comparative 6* | 124 | 88 | 70.8% | 93.9 |

| | | | | |
|---|---|---|---|---|
| * Comparative 6 is Celgard® 3501. | | | | |

The testing shows that the inventive Sample 4 has better cycling performance, higher specific capacity, better capacity retention, and better charge/discharge efficiency than the Comparative 6 material.

Self-discharge test of cells is also conducted. Cells are fully charged after activation process (0.1°C for 3 cycles) and capacity determination at 1°C, shelved at room temperature for a certain period of time and then discharged at 1°C rate to determine the capacity retention, which can be used to characterize the self-discharge performance.

**Table 8 - Cell Capacity Retentions by Self-discharge Test**

| Sample No | 1 week (%) | 2 week (%) | 3 week (%) | 4 week (%) | 5 week (%) |
|---|---|---|---|---|---|
| 4 | 99.1 | 98.4 | 97.8 | 97.2 | 96.6 |
| Comparative 6* | 99.3 | 98.8 | 98.1 | 97.6 | 96.9 |

| | | | | | |
|---|---|---|---|---|---|
| * Comparative 6 is Celgard® 3501. | | | | | |

### Example 6

Electrochemical stability (in terms of electrochemical window) of electrolyte is performed by cyclic voltammetry using three-electrode system with Pt as both the working electrode and the counter electrode and Li as reference electrode. The scan rate is kept constant at 50 mV/s. Electrolyte solution is prepared by dissolving LiPF₆ or LiTFSI into a blend of EC and EMC (30:70 by weight) with concentration of 1.2M.

**Table 9 - Electrochemical Window of Electrolyte System of Example 6**

| Sample No | Salt | Separator | Electrochemical window |
|---|---|---|---|
| Comparative 7 | LiPF₆ | - | 5.9V |
| Comparative 8 | LiPF₆ | Comparative | 5.9V |
| 6 | LiPF₆ | Sample 4 | 6.1V |
| Comparative 9 | LiTFSI | - | 5.9V |
| Comparative 10 | LiTFSI | Comparative | 5.8V |
| 7 | LiTFSI | Sample 4 | 5.8V |

| | | | |
|---|---|---|---|
| * Comparative 6 is Celgard® 3501. | | | |

### Example 7

As listed in Table 10, blends of polypropylene (PP) and Sample 4, along with compatibilizers are compounded in a twin-screw extruder.

**Table 10 - Formulations for Example 7**

| Sample No | Sample 4 (%) | PP (%) | Compatibilizer (%) |
|---|---|---|---|
| 8 | 45.0 | 50.0 | 5.0 |
| 9 | 67.5 | 25.0 | 7.5 |

### Example 8

Samples are extruded into thin film with thickness of 1-2 mil by melt cast process for Li-ion conductivity, mechanical strength and thermal shrinkage tests.

**Table 11 - Test Results for Example 7**

| Sample No | Tensile properties on dry film¹ | | Thermal shrinkage on dry film² | |
|---|---|---|---|---|
| | Stress @ break (psi) | Strain @ break (%) | Machine Direction (%) | Transverse Direction (%) |
| 8 | 6290 | 696 | 0.7 | 0 |
| 9 | 5120 | 659 | 0.7 | 0 |

| | | | | |
|---|---|---|---|---|
| 1 - Mechanical properties were tested in accordance with ASTM D882. 2 - Thermal shrinkage was determined by measuring the TPU films' initial dimensions and then placing the samples in vacuum drying oven at 90°C for 1 hour. The final dimensions are then measured and shrinkage is calculated from the change in dimensions: Shrinkage (%) = (final dimension- initial dimension)/initial dimension×100%. Both machine direction and transverse direction were measured. | | | | |

**Table 12 - Test Results for Example 7**

| Sample No | Li Ion Conductivity¹ (mS/cm) |
|---|---|
| 8 | 0.40 |
| 9 | 0.92 |

| | |
|---|---|
| 1 - Li ion conductivity is present in mS/cm. The values in the table above are averages of three separate test results. Results were obtained by dipping the dried membrane (stored at 80 °C in the vacuum oven for 24 hr) to be tested into a liquid electrolyte (1.2 M LiPF₆ in a 30:70 blend of ethylene carbonate: ethyl methyl carbonate) for 12 hours, then removing the membrane, wiping the surface with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. | |

### Example 9

As listed in Table 13, alloys of Sample 4 and nanofillers are compounded by a twin-screw extruder.

**Table 13 - Formulations of Example 9**

| Sample No | Sample 4(%) | Nano Filler (%) | |
|---|---|---|---|
| | | Nano Silica | Nano Alumina |
| 10 | 99 | 1 | |
| 11 | 95 | 5 | |
| 12 | 90 | 10 | |
| 13 | 99 | | 1 |
| 14 | 95 | | 5 |
| 15 | 90 | | 10 |
| 16 | 85 | | 15 |

### Example 10

Li-ion conductivity of Example **9** is tested and listed in Table **14.** With the increase of nano-filler content, the Li-ion conductivity of alloys increased significantly.

**Table 14 - Test Results of Example 9**

| Sample No | Li Ion Conductivity¹ (mS/cm) |
|---|---|
| 10 | 1.90 |
| 11 | 1.92 |
| 12 | 6.33 |
| 13 | 2.14 |
| 14 | 3.04 |
| 15 | 3.59 |
| 16 | 4.85 |

| | |
|---|---|
| 1 - Li ion conductivity is present in mS/cm. The values in the table above are averages of three separate test results. Results were obtained by dipping the dried membrane (stored at 80 °C in the vacuum oven for 24 hr) to be tested into a liquid electrolyte (1.2 M LiPF₆ in a 30:70 blend of ethylene carbonate: ethyl methyl carbonate) for 12 hours, then removing the membrane, wiping the surface with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. | |

### Example 11

Still further examples are prepared to demonstrate the suitability of the TPU compositions of the invention for electrochemical cell applications, including Li-ion batteries. The following TPU compositions are prepared and tested to measure their hardness, their Li-ion conductivity, and their swelling properties. The formulations and results of these additional samples are summarized in the table below.

**Table 15 - Chemical Compositions for Example 11**

| Sample No | Polyol | Chain Extender |
|---|---|---|
| 17 | 3000 MW poly(diethylene glycol adipate) | BDO |
| 18 | 3000 MW poly(diethylene glycol adipate) | CHDM |
| 19 | 2000 MW polyneopentyl adipate | BDO |
| 20 | 2000 MW poly(ethylene glycol adipate) | BDO |
| 21 | 1000 MW poly(ethylene glycol/diethylene glycol adipate) | BDO |
| 22 | 1000 MW poly(ethylene glycol/diethylene glycol adipate) | CHDM |

Samples are extruded into thin films with thickness of 1.0 mil or less by melt cast process for evaluation, including mechanical properties, Li ion conductivity, and swelling when exposed to common electrolyte systems.

**Table 16 - Results for Example 11**

| Sample No | Hardness¹ | Li Ion Conductivity² (mS/cm) | Swelling³ | |
|---|---|---|---|---|
| | | | Radial (%) | Radial (%) |
| 17 | 87A | 1.24 | 19 | 9 |
| 18 | 84A | Dissolved⁴ | - | - |
| 19 | 87A | 0.78 | 34 | 18 |
| 20 | 88A | 1.06 | 48 | 23 |
| 21 | 91A | 1.39 | 54 | 25 |
| 22 | 84A | Dissolved⁴ | - | - |

| | | | | |
|---|---|---|---|---|
| 1 - Hardness is presented in a Shore A units, as measured by ASTM D-2240. 2 - Li ion conductivity is present in mS/cm. The values in the table above are averages of three separate test results. Results were obtained by dipping the dried membrane (stored at 80 °C in the vacuum oven for 24 hr) to be tested into a liquid electrolyte (1.2 M LiPF₆ in a 30:70 blend of ethylene carbonate: ethyl methyl carbonate) for 12 hours, then removing the membrane, wiping the both surfaces with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. 3 - Swelling is evaluated using a liquid electrolyte (1.2 M LiPF₆ in a 30:70 blend of ethylene carbonate:ethylmethyl carbonate). The dimension of film samples was measured by caliper before and after soaking in the liquid electrolyte for 12 hour. The axial swell (%) = (thickness after soaking-thickness before soaking)/thickness before seaking×100%. The radial swell (%) = (radius after soaking-radius before soaking)/radius before soaking×100%. 4 - Samples 18 and 22 dissolved in the electrolyte system and so no swelling measurements could be completed. | | | | |

The results show that the TPU compositions, specifically samples 17, 19, 20, and 21, are well suited for use in electrochemical cell applications, including Li-ion batteries, and sample 17 is very well suited, having a very good combination of physical properties, electrolyte compatibility, and conductivity compared to other TPU compositions.

Unless otherwise indicated, all percent values, ppm values and parts values are on a weight basis. Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention can be used together with ranges or amounts for any of the other elements. As used herein, the expression "consisting essentially of" permits the inclusion of substances that do not materially affect the basic and novel characteristics of the composition under consideration while the expression "essentially free of' permits the exclusion of substances at least to a level that does not materially affect the basic and novel characteristics of the composition under consideration.

## Claims

1. A membrane comprising
(a) a poly(dialkylene ester) thermoplastic polyurethane composition made by reacting (i) at least one poly(dialkylene ester) polyol intermediate with (ii) at least one diisocyanate and (iii) at least one chain extender;
wherein (i), the polyester polyol intermediate, comprises an intermediate derived from at least one dialkylene glycol and at least one di-carboxylic acid, or an ester or anhydride thereof, and wherein the thermoplastic polyurethane composition further comprises a filler selected from the group consisting of nanofillers and nanofibers.

2. The membrane of claim 1 wherein component (iii) the chain extender comprises hydroquinone bis (beta-hydroxyethyl) ether.

3. The membrane of any of the claims 1 to 2 wherein the di-carboxylic acid contains from 4 to 15 carbon atoms and the dialkylene glycol contains from 2 to 8 aliphatic carbon atoms.

4. The membrane of any of the claims 1 to 3 wherein (ii), the diisocyanate, comprises: 4,4'-methylenebis-(phenyl isocyanate); hexamethylene diisocyanate; 3,3'-dimethylbiphenyl-4,4'-diisocyanate; m-xylylene diisocyanate; phenylene-1,4-diisocyanate; naphthalene-1,5-diisocyanate; diphenylmethane-3,3'-dimethoxy-4,4'-diisocyanate; toluene diisocyanate; isophorone diisocyanate; 1,4-cyclohexyl diisocyanate; decane-1,10-diisocyanate; dicyclohexylmethane-4,4'-diisocyanate; or combinations thereof; and
wherein (iii), the chain extender, comprises: hydroquinone bis (beta-hydroxyethyl) ether; ethylene glycol; diethylene glycol; propylene glycol; dipropylene glycol; 1,4-butanediol; 1,6-hexanediol; 1,3-butanediol; 1,5-pentanediol; neopentylglycol; or combinations thereof.

5. The membrane of any of the claims 1 to 4 wherein: (i), the polyester polyol intermediate, comprises poly(diethylene glycol adipate); (ii), the diisocyanate, comprises 4,4'-methylenebis-(phenyl isocyanate); and (iii), the chain extender, comprises butanediol, benzene glycol, or combinations thereof.

6. The membrane of any of the claims 1 to 5 further comprising an effective amount of a lithium containing salt.

7. The membrane of any of the claims 1 to 6 further comprising an organic solvent.

8. The membrane of any of the claims 1 to 7 wherein said membrane has a Li+ conductivity of >1.0x10⁻⁵ S/cm, as measured with a Solartron analytical system at temperature of 20 to 30 °C.

9. The membrane of any of the claims 1 to 8 wherein (a), the polyester polyol component, is substantially free of polyether polyols.

10. The membrane of any of the claims 1 to 9 further comprising at least one base polymer, or further comprising at least one base polymer wherein the base polymer comprises: a polyolefin; a styrenic resin; a thermoplastic polyurethane, a polyamide; an acrylic polymer; a polyvinylchloride; a polyvinylidene fluoride; a polyethylene oxide; an ethylene oxide-propylene oxide copolymer; a polyacrylonitrile; a polyoxymethylene; a polyester; a polycarbonate; a polyphenylene oxide; polyphenylene sulfide; or combinations thereof.

11. The membrane of any of the claims 1 to 10 further comprising at least one additional additive, comprising a plasticizer, a lubricant, an antioxidant, a heat stabilizer, hydrolytic stabilizer, an acid scavenger, mineral and/or inert filler, or any combination thereof.

12. An electrochemical cell comprising a positive electrode, a negative electrode, and
(I)
(A) a separator membrane as defined in any one of claims 1 to 11, wherein said membrane is disposed between said positive and negative electrodes; and
(B) an electrochemically active electrolyte species.

13. The electrochemical cell of claim 12, wherein said electrolyte species is a liquid electrolyte comprising an alkali metal salt, wherein said electrolyte is dissolved in an aprotic organic solvent, preferably wherein said alkali metal salt is selected from the group consisting of materials having the formula M⁺ X⁻;
wherein M⁺ is an alkali metal cation such as Li⁺, Na⁺, K⁺ or combinations thereof; and
wherein X⁻ is an ion such as Cl⁻, Br⁻, I⁻, ClO₄⁻, BF₄⁻, PF₆⁻, AsF₆⁻, SbF₆⁻, CH₃CO₂⁻, CF₃SO₃⁻, (CH₃SO₂)₂N⁻, (CF₃SO₂)₃C⁻, B(C₂O₄)₂⁻, or combinations thereof; and
wherein said aprotic organic solvent is selected from the group consisting of propylene carbonate, ethylene carbonate, diethyl carbonate, ethyl methyl carbonate, dimethyl carbonate, dipropyl carbonate, dimethyl sulfoxide, acetonitrile, dimethyloxyethane, diethoxyethane, tetrahydrofuran, and combinations thereof.

14. The electrochemical cell of claim 12 or 13 having at least one of the following characteristics:
(i) a charge/discharge cycle life of >500 cycles;
(ii) a charge/discharge efficiency of >90% after 500 cycles;
(iii) an operation window of -10 °C to 70 °C.

15. The electrochemical cell of any of the claims 12 to 14 wherein the electrochemical cell further comprises:
(II) a polymer gel electrolyte system disposed between said positive and negative electrodes, wherein the polymer electrolyte comprises (A) said poly(dialkylene ester) thermoplastic polyurethane composition, (B) an alkali metal salt, and (C) an aprotic organic solvent.

16. The electrochemical cell of any of the claims 12 to 15 wherein the positive and negative electrodes comprise a composition of (a) the poly(dialkylene ester) thermoplastic polyurethane composition as defined in any one of claims 1 to 12, and (b) a cathode or anode powder.

## Patentansprüche

1. Membran, umfassend
(a) eine thermoplastische Poly(dialkylenester)-Polyurethanzusammensetzung, die dadurch hergestellt wird, dass man (i) wenigstens ein Poly(dialkylenester)polyol-Zwischenprodukt mit (ii) wenigstens einem Diisocyanat und (iii) wenigstens einem Kettenverlängerer umsetzt;
wobei (i), das Polyesterpolyol-Zwischenprodukt, ein Zwischenprodukt umfasst, das von wenigstens einem Dialkylenglycol und wenigstens einer Dicarbonsäure oder einem Ester oder Anhydrid davon abgeleitet ist, und wobei die thermoplastische Polyurethanzusammensetzung weiterhin einen Füllstoff umfasst, der aus der Gruppe ausgewählt ist, die aus Nanofüllstoffen und Nanofasern besteht.

2. Membran gemäß Anspruch 1, wobei Komponente (iii), der Kettenverlängerer, Hydrochinonbis(beta-hydroxyethyl)ether umfasst.

3. Membran gemäß einem der Ansprüche 1 bis 2, wobei die Dicarbonsäure 4 bis 15 Kohlenstoffatome enthält und das Dialkylenglycol 2 bis 8 aliphatische Kohlenstoffatome enthält.

4. Membran gemäß einem der Ansprüche 1 bis 3, wobei (ii), das Diisocyanat, umfasst: 4,4'-Methylenbis(phenylisocyanat), Hexamethylendiisocyanat, 3,3'-Dimethylbiphenyl-4,4'-diisocyanat, m-Xylylendiisocyanat, Phenylen-1,4-diisocyanat, Naphthalin-1,5-diisocyanat, Diphenylmethan-3,3'-dimethoxy-4,4'-diisocyanat, Toluoldiisocyanat, Isophorondiisocyanat, 1,4-Cyclohexyldiisocyanat, Decan-1,10-diisocyanat, Dicyclohexylmethan-4,4'-diisocyanat oder Kombinationen davon; und wobei (iii), der Kettenverlängerer, umfasst: Hydrochinonbis(beta-hydroxyethyl)ether, Ethylenglycol, Diethylenglycol, Propylenglycol, Dipropylenglycol, 1,4-Butandiol, 1,6-Hexandiol, 1,3-Butandiol, 1,5-Pentandiol, Neopentylglycol oder Kombinationen davon.

5. Membran gemäß einem der Ansprüche 1 bis 4, wobei: (i), das Polyesterpolyol-Zwischenprodukt, Polydiethylenglycoladipat umfasst; (ii), das Diisocyanat, 4,4'-Methylenbis(phenylisocyanat) umfasst; und (iii), der Kettenverlängerer, Butandiol, Benzolglycol oder Kombinationen davon umfasst.

6. Membran gemäß einem der Ansprüche 1 bis 5, weiterhin umfassend eine wirksame Menge eines lithiumhaltigen Salzes.

7. Membran gemäß einem der Ansprüche 1 bis 6, weiterhin umfassend ein organisches Lösungsmittel.

8. Membran gemäß einem der Ansprüche 1 bis 7, wobei die Membran eine mit einem Solartron-Analysesystem bei einer Temperatur von 20 bis 30 °C gemessene Li⁺-Leitfähigkeit von > 1,0 x 10⁻⁵ S/cm aufweist.

9. Membran gemäß einem der Ansprüche 1 bis 8, wobei (a), die Polyesterpolyolkomponente, im Wesentlichen frei von Polyetherpolyolen ist.

10. Membran gemäß einem der Ansprüche 1 bis 9, weiterhin umfassend wenigstens ein Grundpolymer oder weiterhin umfassend wenigstens ein Grundpolymer, wobei das Grundpolymer umfasst: ein Polyolefin, ein Styrolharz, ein thermoplastisches Polyurethan, ein Polyamid, ein Acrylpolymer, ein Polyvinylchlorid, ein Polyvinylidenfluorid, ein Polyethylenoxid, ein Ethylenoxid-Propylenoxid-Copolymer, ein Polyacrylnitril, ein Polyoxymethylen, einen Polyester, ein Polycarbonat, ein Polyphenylenoxid, ein Polyphenylensulfid oder Kombinationen davon.

11. Membran gemäß einem der Ansprüche 1 bis 10, weiterhin umfassend wenigstens ein zusätzliches Additiv, das einen Weichmacher, ein Gleitmittel, ein Antioxidans, einen thermischen Stabilisator, einen Hydrolysestabilisator, einen Säurefänger, einen mineralischen und/oder inerten Füllstoff oder irgendeine Kombination davon umfasst.

12. Elektrochemische Zelle, umfassend eine positive Elektrode, eine negative Elektrode und
(I)
(A) eine Separatormembran, wie sie in einem der Ansprüche 1 bis 11 definiert ist, wobei sich die Membran zwischen der positiven und der negativen Elektrode befindet; und
(B) eine elektrochemisch aktive Elektrolytspezies.

13. Elektrochemische Zelle gemäß Anspruch 12, wobei die Elektrolytspezies ein flüssiger Elektrolyt ist, der ein Alkalimetallsalz umfasst, wobei der Elektrolyt in einem aprotischen organischen Lösungsmittel gelöst ist, wobei vorzugsweise das Alkalimetallsalz aus der Gruppe ausgewählt ist, die aus Stoffen mit der Formel M⁺X⁻ besteht;
wobei es sich bei M⁺ um ein Alkalimetallkation, wie Li⁺, Na⁺, K⁺ oder Kombinationen davon handelt; und
wobei es sich bei X⁻ um ein Ion, wie Cl⁻, Br⁻, I⁻, ClO₄⁻, BF₄⁻, PF₆⁻, AsF₆⁻, SbF₆⁻, CH₃CO₂⁻, CF₃SO₃⁻, (CH₃SO₂)₂N⁻, (CF₃SO₂)C⁻, B(C₂O₄)₂⁻ oder Kombinationen davon handelt; und
wobei das aprotische organische Lösungsmittel aus der Gruppe ausgewählt ist, die aus Propylencarbonat, Ethylencarbonat, Diethylcarbonat, Ethylmethylcarbonat, Dimethylcarbonat, Dipropylcarbonat, Dimethylsulfoxid, Acetonitril, Dimethyloxyethan, Diethoxyethan, Tetrahydrofuran und Kombinationen davon besteht.

14. Elektrochemische Zelle gemäß Anspruch 12 oder 13, die wenigstens eines der folgenden Merkmale aufweist:
(i) eine Lade-/Entlade-Zykluslebensdauer von > 500 Zyklen;
(ii) einen Lade-/Entlade-Wirkungsgrad von > 90% nach 500 Zyklen;
(iii) ein Betriebsfenster von -10 °C bis 70 °C.

15. Elektrochemische Zelle gemäß einem der Ansprüche 12 bis 14, wobei die elektrochemische Zelle weiterhin umfasst:
(II) ein Polymergel-Elektrolytsystem, das sich zwischen der positiven und der negativen Elektrode befindet, wobei der Polymerelektrolyt (A) die thermoplastische Poly(dialkylenester)-Polyurethanzusammensetzung, (B) ein Alkalimetallsalz und (C) ein aprotisches organisches Lösungsmittel umfasst.

16. Elektrochemische Zelle gemäß einem der Ansprüche 12 bis 15, wobei die positive und die negative Elektrode eine Zusammensetzung aus (a) der thermoplastischen Poly(dialkylenester)-Polyurethanzusammensetzung gemäß einem der Ansprüche 1 bis 12 und (b) einem Kathoden- oder Anodenpulver umfassen.

## Revendications

1. Membrane comprenant
(a) une composition de polyuréthane thermoplastique à base d'un poly(ester de dialkylène) préparée par la réaction (i) d'au moins un intermédiaire poly(ester de dialkylène) polyol avec (ii) au moins un diisocyanate et (iii) au moins un allongeur de chaîne ;
dans laquelle (i), l'intermédiaire polyester polyol, comprend un intermédiaire dérivé d'au moins du dialkylène glycol et d'au moins d'un acide dicarboxylique, ou d'un ester ou anhydride de celui-ci, et dans laquelle la composition de polyuréthane thermoplastique comprend en outre une charge sélectionnée dans le groupe constitué de nanocharges et de nanofibres.

2. Membrane selon la revendication 1 dans laquelle le composant (iii) l'allongeur de chaîne comprend de l'hydroquinone bis (bêta-hydroxyéthyl) éther.

3. Membrane selon l'une quelconque des revendications 1 à 2 dans laquelle l'acide dicarboxylique contient de 4 à 15 atomes de carbone et le dialkylène glycol contient de 2 à 8 atomes de carbone aliphatiques.

4. Membrane selon l'une quelconque des revendications 1 à 3 dans laquelle (ii), le diisocyanate, comprend : du 4,4'-méthylènebis-(phényl isocyanate) ; de l'hexaméthylène diisocyanate ; du 3,3'-diméthylbiphényl-4,4'-diisocyanate ; du m-xylylène diisocyanate ; du phénylène-1,4-diisocyanate ; du naphtalène-1,5-diisocyanate ; du diphénylméthane-3,3'-diméthoxy-4,4'-diisocyanate ; du toluène diisocyanate ; de l'isophorone diisocyanate ; du 1,4-cyclohexyl diisocyanate ; du décane-1,10-diisocyanate ; du dicyclohexylméthane-4,4'-diisocyanate ; ou des combinaisons de ceux-ci ; et
dans laquelle (iii), l'allongeur de chaîne, comprend : de l'hydroquinone bis (bêta-hydroxyéthyl) éther ; de l'éthylène glycol ; du diéthylène glycol ; du propylène glycol ; du dipropylène glycol ; du 1,4-butanediol ; du 1,6-hexanediol ; du 1,3-butanediol ; du 1,5-pentanediol ; du néopentylglycol ; ou des combinaisons de ceux-ci.

5. Membrane selon l'une quelconque des revendications 1 à 4 dans laquelle : (i), l'intermédiaire polyester polyol, comprend un poly(adipate de diéthylène glycol) ; (ii), le diisocyanate, comprend du 4,4'-méthylènebis(phényl isocyanate) ; et (iii), l'allongeur de chaîne, comprend du butanediol, du benzène glycol, ou des combinaisons de ceux-ci.

6. Membrane selon l'une quelconque des revendications 1 à 5 comprenant en outre une quantité efficace d'un sel contenant du lithium.

7. Membrane selon l'une quelconque des revendications 1 à 6 comprenant en outre un solvant organique.

8. Membrane selon l'une quelconque des revendications 1 à 7 dans laquelle ladite membrane présente une conductivité de Li+ > 1,0 x 10⁻⁵ S/cm, telle que mesurée avec un système analytique Solartron à une température de 20 à 30 °C.

9. Membrane selon l'une quelconque des revendications 1 à 8 dans laquelle (a), le composant polyester polyol, est sensiblement exempt de polyéther polyols.

10. Membrane selon l'une quelconque des revendications 1 à 9 comprenant en outre au moins un polymère de base, ou comprenant en outre au moins un polymère de base dans lequel le polymère de base comprend : une polyoléfine ; une résine styrénique ; un polyuréthane thermoplastique, un polyamide ; un polymère acrylique ; un polychlorure de vinyle ; un polyfluorure de vinylidène ; un polyoxyde d'éthylène ; un copolymère d'oxyde d'éthylène-oxyde de propylène ; un polyacrylonitrile ; un polyoxyméthylène ; un polyester ; un polycarbonate ; un polyoxyde de phénylène ; un polysulfure de phénylène ; ou des combinaisons de ceux-ci.

11. Membrane selon l'une quelconque des revendications 1 à 10 comprenant en outre au moins un additif supplémentaire, comprenant un plastifiant, un lubrifiant, un antioxydant, un stabilisant thermique, un stabilisant vis-à-vis de l'hydrolyse, un désactivateur d'acide, un minéral et/ou une charge inerte, ou n'importe quelle combinaison de ceux-ci.

12. Cellule électrochimique comprenant une électrode positive, une électrode négative, et
(I)
(A) une membrane de séparateur telle que définie dans l'une quelconque des revendications 1 à 11,
dans laquelle ladite membrane est disposée entre lesdites électrodes positive et négative ; et
(B) une espèce d'électrolyte électrochimiquement actif.

13. Cellule électrochimique selon la revendication 12, dans laquelle ladite espèce d'électrolyte est un électrolyte liquide comprenant un sel de métal alcalin, dans laquelle ledit électrolyte est dissous dans un solvant organique aprotique, de préférence dans laquelle ledit sel de métal alcalin est sélectionné dans le groupe constitué des matériaux ayant la formule M⁺X⁻ ;
dans laquelle M⁺ est un cation de métal alcalin tel que Li⁺, Na⁺, K⁺ ou des combinaisons de ceux-ci ; et
dans laquelle X⁻ est un ion tel que Cl⁻, Br⁻, I⁻, ClO₄⁻, BF₄⁻, PF₆⁻, AsF₆⁻, SbF₆⁻, CH₃CO₂⁻, CF₃SO₃⁻, (CH₃SO₂)₂N⁻, (CF₃SO₂)₃C⁻, B(C₂O₄)₂⁻, ou des combinaisons de ceux-ci ; et
dans laquelle ledit solvant organique aprotique est sélectionné dans le groupe constitué du carbonate de propylène, du carbonate d'éthylène, du carbonate de diéthyle, du carbonate d'éthyle et de méthyle, du carbonate de diméthyle, du carbonate de dipropyle, du diméthyl sulfoxyde, de l'acétonitrile, du diméthyloxy-éthane, du diéthoxyéthane, du tétrahydrofurane, et des combinaisons de ceux-ci.

14. Cellule électrochimique selon la revendication 12 ou 13 ayant moins l'une des caractéristiques suivantes :
(i) une durée de vie en cyclage de charge/décharge > 500 cycles ;
(ii) un rendement de charge/décharge > 90 % après 500 cycles ;
(iii) une fenêtre de fonctionnement allant de -10 °C à 70 °C.

15. Cellule électrochimique selon l'une quelconque des revendications 12 à 14 dans laquelle la cellule électrochimique comprend en outre :
(II) un système d'électrolyte gélifié polymère disposé entre lesdites électrodes positive et négative, dans laquelle l'électrolyte polymère comprend (A) ladite composition de polyuréthane thermoplastique de poly(ester de dialkylène), (B) un sel de métal alcalin, et (C) un solvant organique aprotique.

16. Cellule électrochimique selon l'une quelconque des revendications 12 à 15 dans laquelle des électrodes positive et négative comprennent une composition (a) de la composition de polyuréthane thermoplastique de poly(ester de dialkylène) telle que définie dans l'une quelconque des revendications 1 à 12, et (b) une poudre de cathode ou d'anode.
